(19) Europäisches Patentamt
European Patent Office
Office européen des brevets

(11) Publication number: **0 470 557 A2**

# (12) EUROPEAN PATENT APPLICATION

(21) Application number: **91113142.3**

(22) Date of filing: **05.08.91**

(51) Int. Cl.$^5$: **C08L 67/00**, C08L 69/00, C08L 67/03, C08L 81/06

(30) Priority: **07.08.90 JP 208627/90**
**07.08.90 JP 208628/90**
**31.08.90 JP 230319/90**

(43) Date of publication of application:
**12.02.92 Bulletin 92/07**

(84) Designated Contracting States:
**DE FR GB IT NL**

(71) Applicant: **KAWASAKI STEEL CORPORATION**
**1-28, Kitahonmachi-Dori 1-Chome**
**Chuo-ku Kobe-Shi Hyogo 650(JP)**

(72) Inventor: **Izumi, Mitsuhiko, c/o Technical Research Division**
**Kawasaki Steel Corporation, 1, Kawasaki-cho**
**Chiba-shi, Chiba(JP)**
Inventor: **Kajioka, Masahiko, c/o Technical Research Division**
**Kawasaki Steel Corporation, 1, Kawasaki-cho**
**Chiba-shi, Chiba(JP)**
Inventor: **Yamagishi, Touru, c/o Technical Research Division**
**Kawasaki Steel Corporation, 1, Kawasaki-cho**
**Chiba-shi, Chiba(JP)**
Inventor: **Yoshino, Kenji, c/o Technical Research Division**
**Kawasaki Steel Corporation, 1, Kawasaki-cho**
**Chiba-shi, Chiba(JP)**
Inventor: **Wakui, Tadahiro, c/o Technical Research Division**
**Kawasaki Steel Corporation, 1, Kawasaki-cho**
**Chiba-shi, Chiba(JP)**

(74) Representative: **Henkel, Feiler, Hänzel & Partner**
**Möhlstrasse 37**
**W-8000 München 80(DE)**

## (54) Resin composition.

(57) Resin compositions which substantially comprise a specified liquid crystalline polyester resin and another specified resin selected from a polycarbonate resin, a polyarylate-based resin, a polyethersulfone resin and a polysulfone resin, and which are possessed of markedly balanced physical properties with excellent heat resistance, dimensional stability and mechanical strength, as well as mitigated anisotropy with respect to mechanical properties.

The resin composition of this invention finds its use in such applications as electronic and electric instrument parts and machine parts.

EP 0 470 557 A2

## FIELD OF THE INVENTION

This invention relates to a resin composition which is improved in heat resistance, dimensional stability and mechanical strength, and which exhibits reduced anisotropy with respect to mechanical strength and well balanced physical properties.

## BACKGROUND OF THE INVENTION

To cope with recently increasing need for high performance plastics, a number of resins having a variety of properties have been developed and commercialized. Especially, liquid crystalline polyester resins capable of forming anisotropic molten phase (for example those disclosed in JP-A 63-284221 and JP-A 64-33123) are worthy of notice because of their excellent heat resistance and mechanical properties. (The term "JP-A" as used herein means an "unexamined published Japanese patent application").

These prior art liquid crystalline polyester resins, however, have an disadvantage in that they exhibit outstanding anisotropy with respect to mechanical strength. With a view to solving such a problem, it was proposed that inorganic fillers such as glass fibers be compounded into liquid crystalline polyesters (for example, JP-A 63-264660 and JP-A 64-38464). Mixing of these organic fillers, however, brought up another problems such as the wear of the screw in the molding machine and the increase in the brittleness and the decrease in the surface gloss of the molded article.

With the aim of overcoming these problems, a number of processes have been disclosed in which a specified liquid crystalline polyester is blended with a specified resin, but the products of these processes were still practically insufficient in terms of their heat resistances, mechanical strengths and dimensional stabilities. Many liquid crystalline polyester compositions have been disclosed for instance in U.S.Patent 165536, JP-A 61-26656, U.S.Patent 165532, JP-A 60-149656, JP-A 63-183952 and JP-A 2-102257, but these compositions are still insufficient in terms of improving heat resistances, moldabilities and anisotropy.

The present invention contemplates overcoming the aforementioned problems of the prior art liquid crystalline polyester resins.

## SUMMARY OF THE INVENTION

It is accordingly a primary object of the present invention to provide a resin composition which is improved in heat resistance, dimensional stability and mechanical strength, and which exhibits small anisotropy with respect to mechanical strength and well balanced physical properties.

According to a first aspect of the present invention, there is provided a resin composition which comprises:

a liquid crystalline polyester resin (A) consisting essentially of units I, II, III, IV and V represented by the following formulae I to V;

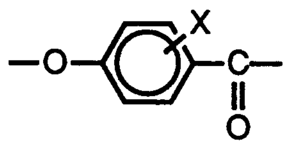

I,

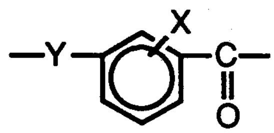

II,

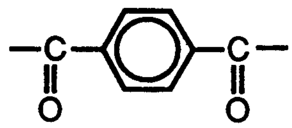

III,

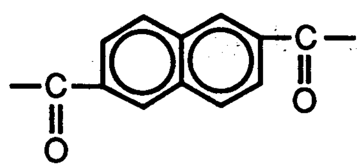

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group and formula V represents a symmetric dioxy unit having at least one single or condensed aromatic ring; the units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polycarbonate resin (D);

wherein the liquid crystalline polyester resin (A) is 45 to 95% by weight of the total amount of the liquid crystalline polyester resin (A) and the polycarbonate resin (D).

According to a second aspect of the present invention, there is provided a resin composition which comprises:

a liquid crystalline polyester resin (B) consisting essentially of the aforementioned units I, II, III, IV and V and a unit VI represented by the following formula VI;

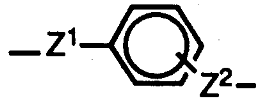

VI

wherein $Z^1$ is imino group and $Z^2$ is imino group, oxygen atom or carbonyl group, $Z^1$ and $Z^2$ being in para or meta position to each other; the units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polycarbonate resin (D);

wherein the liquid crystalline polyester resin (B) is 45 to 95% by weight of the total amount of the liquid crystalline polyester resin (B) and the polycarbonate resin (D).

According to a third aspect of the present invention, there is provided a resin composition which comprises:

a liquid crystalline polyester resin (C) consisting essentially of units VI, VII, VIII, IX and X represented by the following formulae VI to X;

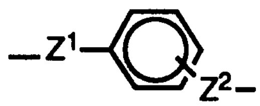 VI,

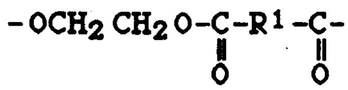 VII,

-O-$R^2$-O- VIII,

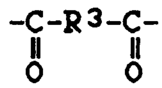 IX, and

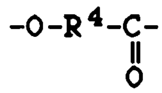 X

wherein $Z^1$ is imino group and $Z^2$ is imino group, oxygen atom or carbonyl group, $Z^1$ and $Z^2$ being in para or meta position to each other, and each of $R^1$, $R^2$, $R^3$ and $R^4$ is independently at least one divalent group selected from the class consisting of paraphenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, a halogen atom, nitro group, cyano group or an alkoxy group; the units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is imino group or oxygen atom while a molar ratio of unit IX / unit VIII ranges from 0.8 to 1.1 when $Z^2$ is carbonyl group; and

a polycarbonate resin (D);

wherein the liquid crystalline polyester resin (C) is 45 to 95% by weight of the total amount of the liquid crystalline polyester resin (C) and the polycarbonate resin (D).

According to a fourth aspect of the present invention, there is provided a resin composition which comprises at least two liquid crystalline polyester resins selected from the foregoing liquid crystalline polyester resins (A), (B) and (C) and the foregoing polycarbonate resin (D), wherein the liquid crystalline polyester resins are 45 to 95% by weight of the total amount of the liquid crystalline polyester resins and the polycarbonate resin (D).

According to a fifth aspect of the present invention, there is provided a resin composition which comprises:

a liquid crystalline polyester resin (A) consisting essentially of the aforementioned units I, II, III, IV and V, the units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (A) is 45 to 95% by weight of the total amount of the liquid crystalline polyester resin (A) and the polyarylate-based resin (E).

According to a sixth aspect of the present invention, there is provided a resin composition which comprises:

a liquid crystalline polyester resin (B) consisting essentially of the aforementioned units I, II, III, IV, V

and VI, the units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (B) is 45 to 95% by weight of the total amount of the liquid crystalline polyester resin (B) and the polyarylate-based resin (E).

According to a seventh aspect of the present invention, there is provided a resin composition which comprises:

a liquid crystalline polyester resin (C) consisting essentially of the aforementioned units VI, VII, VIII, IX and X, the units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is an imino group or an oxygen atom while a molar ratio of unit IX / unit VIII ranges from 0.8 to 1.1 when $Z^2$ is a carbonyl group; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (C) is 45 to 95% by weight of the total amount of the liquid crystalline polyester resin (C) and the polyarylate-based resin (E).

According to an eighth aspect of the present invention, there is provided a resin composition which comprises at least two liquid crystalline polyester resins selected from the aforementioned liquid crystalline polyester resins (A), (B) and (C) and the foregoing polyarylate-based resin (E), wherein the liquid crystalline polyester resins is 45 to 95% by weight of the total amount of the liquid crystalline polyester resins and the polyarylate-based resin (E).

According to a ninth aspect of the present invention, there is provided a resin composition which comprises:

a liquid crystalline polyester resin (A) consisting essentially of the aforementioned units I, II, III, IV and V, the units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polyethersulfone resin (F);

wherein the liquid crystalline polyester resin (A) is 45 to 95% by weight of the total amount of the liquid crystalline polyester resin (A) and the polyethersulfone resin (F).

According to a tenth aspect of the present invention, there is provided a resin composition which comprises:

a liquid crystalline polyester resin (B) consisting essentially of the aforementioned units I, II, III, IV, V and VI, the units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polyethersulfone resin (F);

wherein the liquid crystalline polyester resin (B) is 45 to 95% by weight of the total amount of the liquid crystalline polyester resin (B) and the polyethersulfone resin (F).

According to an eleventh aspect of the present invention, there is provided a resin composition which comprises:

a liquid crystalline polyester resin (C) consisting essentially of the aforementioned units VI, VII, VIII, IX and X, the units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is an imino group or an oxygen atom while a molar ratio of unit IX / unit VIII ranges from 0.8 to 1.1 when $Z^2$ is a carbonyl group; and

a polyethersulfone resin (F);

wherein the liquid crystalline polyester resin (C) is 45 to 95% by weight of the total amount of the liquid crystalline polyester resin (C) and the polyethersulfone resin (F).

According to a twelfth aspect of the present invention, there is provided a resin composition which comprises at least two liquid crystalline polyester resins selected from the aforementioned liquid crystalline polyester resins (A), (B) and (C) and the foregoing polyethersulfone resin (F), wherein the liquid crystalline polyester resins are 45 to 95% by weight of the total amount of the liquid crystalline polyester resins and the polyethersulfone resin (F).

According to a thirteenth aspect of the present invention, there is provided a resin composition which comprises:

a liquid crystalline polyester resin (A) consisting essentially of the aforementioned units I, II, III, IV and V, the units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polysulfone resin (G);

wherein the liquid crystalline polyester resin (A) is 45 to 95% by weight of the total amount of the liquid crystalline polyester resin (A) and the polysulfone resin (G).

According to a fourteenth aspect of the present invention, there is provided a resin composition which comprises:

a liquid crystalline polyester resin (B) consisting essentially of the aforementioned units I, II, III, IV, V and VI, the units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polysulfone resin (G);

wherein the liquid crystalline polyester resin (B) is 45 to 95% by weight of the total amount of the liquid crystalline polyester resin (B) and the polysulfone resin (G).

According to a fifteenth aspect of the present invention, there is provided a resin composition which comprises:

a liquid crystalline polyester resin (C) consisting essentially of the aforementioned units VI, VII, VIII, IX and X, the units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is an imino group or an oxygen atom while a molar ratio of unit IX / unit VIII ranges from 0.8 to 1.1 when $Z^2$ is a carbonyl group; and

a polysulfone resin (G);

wherein the liquid crystalline polyester resin (C) is 45 to 95% by weight of the total amount of the liquid crystalline polyester resin (C) and the polysulfone resin (G).

According to a sixteenth aspect of the present invention, there is provided a resin composition which comprises at least two liquid crystalline polyester resins selected from the aforementioned liquid crystalline polyester resins (A), (B) and (C) and the foregoing polysulfone resin (G), wherein the liquid crystalline polyester resins are 45 to 95% by weight of the total amount of the liquid crystalline polyester resins and the polysulfone resin (G).

Other objects and advantages of the present invention will be made apparent as the description progresses.

## DETAILED DESCRIPTION OF THE INVENTION

Firstly, liquid crystalline polyester resins for use in the present invention are described.

The liquid crystalline polyester resin (A) consists essentially of units I, II, III, IV and V represented by the following formulae I to V;

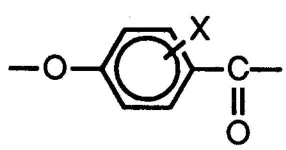

I,

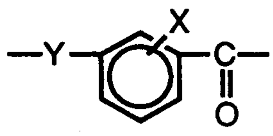

II,

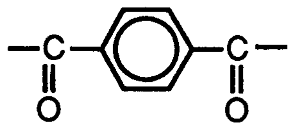

III,

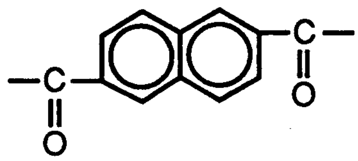

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group and formula V represents a symmetric dioxy unit having at least one isolate or condensed aromatic ring.

Unit I as represented by the foregoing formula I is derived from p-hydroxybenzoic acid or p-hydroxybenzoic acid derivatives in which the benzene nucleus is substituted with a $C_1$-$C_4$ alkyl group, a $C_1$-$C_4$ alkoxy group, a $C_8$-$C_{10}$ aryl group or a halogen atom, preferably chloro or bromo.

Typical examples of the preferred compounds from which unit (I) is derived include unsubstituted p-hydroxybenzoic acid and ester-forming derivatives thereof such as acetate, propionate, benzoate, methyl, ethyl and phenyl derivatives.

Unit (I) is contained in the liquid crystalline polyester resin (A) in an amount of from about 40 to about 70 mol%, preferably from about 45 to about 65 mol%. Amounts if less than 40 mol% or more than 70 mol% would result in poor mechanical strength of the liquid crystalline polyester resin (A) and therefore of the resin composition of the present invention.

Unit II as represented by the foregoing formula II is an m-hydroxybenzoic acid unit (when Y is oxygen atom), an isophthaloyl unit (when Y is a carbonyl group) or a derivative of one of these units in which the benzene nucleus of these units is substituted with a $C_1$-$C_4$ alkyl, a $C_1$-$C_4$ alkoxy, a $C_8$-$C_{10}$ aryl, or a halogen atom, preferably chloro or bromo.

Typical examples of the preferred compounds from which unit II is derived include unsubstituted isophthalic acid and mono-or diester derivatives thereof with methyl, ethyl and phenyl and unsubstituted m-hydroxybenzoic acid and mono- or diester derivatives thereof with acetate, propionate, benzoate, methyl, ethyl and phenyl.

Unit II is contained in the liquid crystalline polyester resin (A) in an amount of from 1 to 8 mol%, preferably from 2 to 5 mol%. With less than 1 mol% of unit II, the resulting liquid crystalline polyester resin (A) exhibits a higher flow temperature and is thus rather difficult to mold. When the content of unit (II) in the polyester exceeds 8 mol%, the heat resistance of the resulting liquid crystalline polyester resin (A) and therefore of the resin composition of the present invention is lowered.

Unit III as represented by the foregoing formula III is derived from terephthalic acid or mono- or diester derivative thereof with methyl, ethyl, phenyl or the like, while unit IV as represented by the foregoing formula IV is derived from 2,6-naphthalene dicarboxylic acid or mono- or diester derivatives thereof with methyl, ethyl, phenyl or the like.

The combined content of the units (III + IV) ranges from 6 to 36 mol%, preferably from 12 to 27 mol%. With a combined content (III + IV) of less than 6 mol%, the resulting liquid crystalline polyester resin (A) has a too high flow temperature to mold with ease, while the polyester resin (A) and therefore the resulting resin composition of the present invention tends to be colored and loses mechanical strength when the

combined content is in excess of 36 mol%.

The molar ratio between units III and IV as expressed by [unit III / (units III + IV)] ranges from 0.1 to 0.8, preferably from about 0.3 to 0.7. With molar ratios of less than 0.1 or more than 0.8, the resulting liquid crystalline polyester resin (A) exhibits a higher flow temperature and is thus difficult to mold. At a molar ratio of less than 0.1, heat resistance of the liquid crystalline polyester resin (A) and therefore the resulting resin composition of the present invention becomes poor.

Unit V as represented by the foregoing formula V is derived from a symmetrical dihydroxy compound or derivatives thereof.

Typical examples of the preferred compounds from which unit V is derived may be selected from compounds represented by the following formulae.

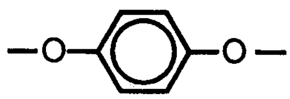

,

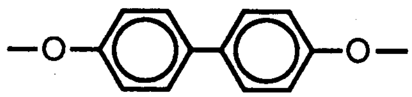

,

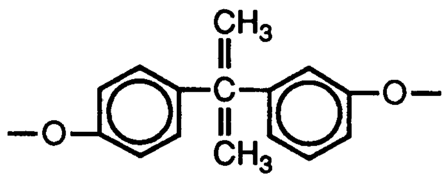

,

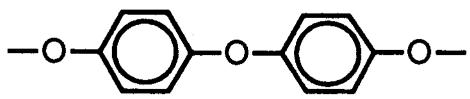

,

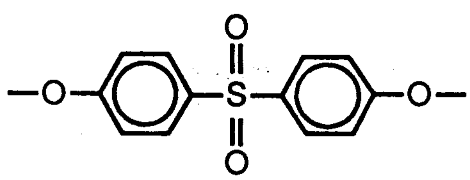

, and

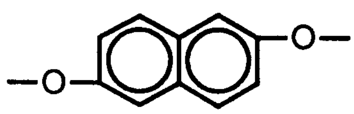

.

Illustrative examples of these compounds include hydroquinone, bisphenol-A, 4,4'-dihydroxybiphenyl, dihydroxybiphenyl ether, 2,6-dihydroxynaphthalene and the like, and mono- and diester derivatives thereof such as acetates, propionates and benzoates, of which most preferred are 4,4'-dihydroxybiphenyl and 2,6-dihydroxynaphthalene.

Unit V is contained in the liquid crystalline polyester resin (A) in an amount of from 10 to 40 mol%, preferably from 17.5 to 27.5 mol%. With less than 10 mol% of unit (V), the resulting liquid crystalline polyester resin (A) exhibits a higher flow temperature and is thus difficult to mold. More than 40 mol% of unit (V) will undesirably affect the heat resistance of the liquid crystalline polyester resin (A) and therefore of the resin composition of the present invention.

The liquid crystalline polyester resin (A) is obtained by polymerization using appropriate compounds (monomer, oligomer and polymer) as starting materials of the aforementioned units I through V in such amounts that the resulting polyester resin consists of these units in the aforementioned ratio.

Polymerization methods and conditions for the preparation of the liquid crystalline polyester resin (A) are not specifically limited. Starting materials from which each of the aforementioned units I through V is derived may be used alone or as a mixture of two or more.

The liquid crystalline polyester resin (B) consists essentially of the aforementioned units I through V in connection with the liquid crystalline polyester resin (A) and an additional unit VI represented by the following formula VI:

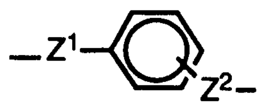 VI

wherein $Z^1$ is imino group and $Z^2$ is imino group, oxygen atom or carbonyl group, $Z^1$ and $Z^2$ being in para or meta position to each other.

Since units I through V in the liquid crystalline polyester resin (B) are the same as those in the foregoing liquid crystalline polyester resin (A) with respect to their structure and content, only unit VI is described in the following.

Unit VI is a unit having an anilino (or phenylamino) group and represented by the aforementioned formula VI. Typical examples of preferred compounds from which unit VI is derived include p- or m-phenylenediamine, 4-acetoxyacetanilide, p- or m-acetamidobenzoic acid, p- or m-aminobenzoic acid and ester-forming derivatives thereof.

Unit VI should be present in the liquid crystalline polyester resin (B) in an amount of from 0.1 to 10 mol%, preferably from 1 to 8 mol%. Less than 0.1 mol% of unit VI is ineffective to mitigate the anisotropy of the polyester by incorporating an amide group. More than 10 mol% of the unit results in a high melting temperature and an increased melt viscosity, and thus adversely affects moldability of the liquid crystalline polyester resin (B) and therefore of the resin composition of the present invention, as well as decrease in heat resistance, mechanical strength and elastic modulus of the resin composition.

The liquid crystalline polyester resin (B) is obtained by polymerization using appropriate compounds (monomer, oligomer and polymer) as starting materials of the aforementioned units I through VI in such amounts that the resulting polyester resin consists of these units in the aforementioned ratio.

Polymerization methods and conditions for the preparation of the liquid crystalline polyester resin (B) are not specifically limited. Starting materials from which each of the aforementioned units I through VI is derived may be used alone or as a mixture of two or more.

The liquid crystalline polyester resin (C) consists essentially of units VI, VII, VIII, IX and X represented by the following general formulae VI to X;

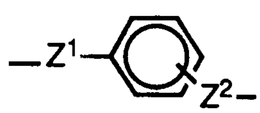 VI,

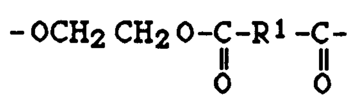 VII,

$-O-R^2-O-$ VIII,

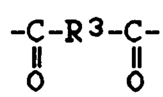 IX, and

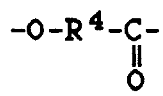 X

wherein $Z^1$ is imino group and $Z^2$ is imino group, oxygen atom or carbonyl group, $Z^1$ and $Z^2$ being in para or meta position to each other, and each of $R^1$, $R^2$, $R^3$ and $R^4$ is independently at least one divalent group selected from the class consisting of para-phenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, a halogen atom, nitro group, cyano group or an alkoxy radical.

Since unit VI in the liquid crystalline polyester resin (C) is the same as that in the foregoing liquid crystalline polyester resin (B) with respect to its structure and content (except that its preferred content is in the range of from 0.3 to 7 mol% in this instance), description with regard to unit VI is omitted in the following.

In unit VII as represented by the foregoing formula VII, $R^1$ is at least one divalent group selected from the class consisting of para-phenylene group, meta-phenylene group, 2,6-naphthalene group and 4,4'-biphenylene group, where some of the hydrogen atoms on the aromatic rings in $R^1$ may be replaced by a low alkyl group, a halogen atom, nitro group, cyano group or an alkoxy group. In view of the easy availability of the starting materials, para-phenylene group and 2,6-naphthalene group are preferred as $R^1$.

In general, unit VII is introduced into the liquid crystalline polyester resin (C) using a polyester which contains such a group as a recurring unit.

Illustrative examples of such materials include polyethylene terephthalate, polyethylene-2,6-naphthoate and the like.

Unit VII should be present in the liquid crystalline polyester resin (C) in an amount of from 3 to 30 mol%, preferably from 5 to 20 mol%. Less than 3 mol% of unit VII results in a high melting temperature of the liquid crystalline polyester resin (C), and thus adversely affects moldability of the resin composition of the present invention. More than 30 mol% of the unit results in a low melting temperature of the liquid crystalline polyester resin (C), and thus moldability of the resin composition of the present invention becomes easy, but with a disadvantage of causing decrease in the heat resistance of the liquid crystalline polyester resin (C) and therefore of the resin composition of the present invention.

In unit VIII as represented by the foregoing formula VIII, $R^2$ is at least one divalent group selected from the class consisting of para-phenylene group, meta-phenylene group, 2,6-naphthalene group and 4,4'-biphenylene group, where some of the hydrogen atoms on the aromatic rings in $R^2$ may be replaced by a low alkyl group, a halogen atom, nitro group, cyano group or an alkoxy group. In view of the easy availability of the starting materials, para-phenylene group, 2-methyl-para-phenylene group, 2-chloro-para-phenylene group, 2-phenyl-para-phenylene group, 4,4'-biphenylene group and 2,6-naphthalene group are preferred.

Unit VIII is introduced into the liquid crystalline polyester resin (C) using for instance hydroquinone, 4,4'-biphenol or derivative thereof as the starting material.

Unit VIII should be present in the liquid crystalline polyester resin (C) in an amount of from 5 to 30 mol%, preferably from 8 to 20 mol%. Less than 5 mol% or more than 30 mol% of unit VIII results in poor mechanical strength of the liquid crystalline polyester resin (C) and therefore of the resin composition of the present invention.

In unit IX as represented by the foregoing formula IX, $R^3$ is at least one divalent group selected from the class consisting of para-phenylene group, meta-phenylene group, 2,6-naphthalene group and 4,4'-biphenylene group, where some of the hydrogen atoms on the aromatic rings in $R^3$ may be replaced by a low alkyl group, a halogen atom, nitro group, cyano group or an alkoxy group. In view of the easy availability of the starting materials, para-phenylene group is preferred as $R^3$.

Unit IX is introduced into the liquid crystalline polyester resin (C) using for instance terephthalic acid or its derivative as the starting material.

The ratio of unit IX in the liquid crystalline polyester resin (C) is affected by the structure of the aforementioned unit VI and the ratio of the aforementioned units VI and VIII.

When $Z^2$ in the foregoing formula VI is imino group or oxygen atom, preferred molar ratio expressed as unit IX / (unit VI + unit VIII) may be in the range of from 0.8 to 1.1. When $Z^2$ is carbonyl group, preferred molar ratio expressed as unit IX / unit VIII may also be in the range of from 0.8 to 1.1. Outside this range, not only the liquid crystalline polyester resin (C) tends to be colored, but also the polyester resin (C) and therefore the resulting resin composition of the present invention show poor mechanical strength and reduced heat resistance.

In unit X as represented by the foregoing formula X, $R^4$ is at least one divalent group selected from the class consisting of para-phenylene group, meta-phenylene group, 2,6-naphthalene group and 4,4'-biphenylene group, where some of the hydrogen atoms on the aromatic rings in $R^4$ may be replaced by a low alkyl group, a halogen atom, nitro group, cyano group or an alkoxy group. In view of the easy

availability of the starting materials, para-phenylene group and meta-phenylene group are preferred as $R^4$.

Unit X is introduced into the liquid crystalline polyester resin (C) using for instance parahydroxybenzoic acid, metahydroxybenzoic acid or derivatives thereof as the starting material.

Unit X should be present in the liquid crystalline polyester resin (C) in an amount of from 30 to 85 mol%, preferably from 40 to 80 mol%. Less than 30 mol% or more than 85 mol% of unit X results in markedly poor mechanical strength of the liquid crystalline polyester resin (C) and therefore of the resulting resin composition of the present invention. The liquid crystalline polyester resin (C) is obtained by polymerization using appropriate compounds (monomer, oligomer and polymer) as starting materials of the aforementioned units VI through X in such amounts that the resulting polyester resin consists of these units in the aforementioned ratio.

Typical examples of preferred compounds from which the aforementioned units VI through X are derived correspondingly may be selected from the group consisting of polyesters, aromatic diols (and derivatives thereof), aromatic dicarboxylic acids (and derivatives thereof), aromatic hydroxycarboxylic acids (and derivatives thereof), meta- or para-phenylenediamines (and derivatives thereof), meta- or para-aminophenols (and derivatives thereof) and meta- or para-aminobenzoic acids (and derivatives thereof).

Starting materials from which each of the aforementioned units VI through X is derived may be used alone or as a mixture of two or more.

Polymerization methods and conditions for the preparation of the liquid crystalline polyester resin (C) are not specifically limited.

Next, the polycarbonate resin (D) for use in the present invention is described.

The polycarbonate resin to be used in the present invention is a polyester of carbonic acid and a polyhydric alcohol or polyhydric phenol and has a recurring unit represented by the following general formula:

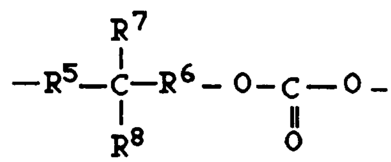

wherein $R^5$ and $R^6$ each represents at least one aromatic group selected from the class consisting of naphthylene group, phenylene group, a halogen-substituted phenylene group and an alkyl-substituted phenylene group, and $R^7$ and $R^8$ each represents at least one member selected from the class consisting of hydrogen atom, an aliphatic hydrocarbon group not containing an unsaturated bond, and a group capable of forming a cycloalkane group together with the vicinal

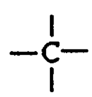

atom, provided that the sum of carbon atoms in $R^7$ and $R^8$ is not more than 12.

Preferred polycarbonate resins include those which are derived by reaction between bisphenol A and phosgene, by reaction between bisphenol A and a diphenyl carbonate, by reaction between bisphenol A and N,N'-carbonyldiimidazole and the like. A polycarbonate resin obtained by reaction between bisphenol A and phosgene and has a recurring unit represented by the following formula is particularly preferred since it has high mechanical strength and durability. This particularly preferred polycarbonate generally contains 100 to 400 recurring unit:

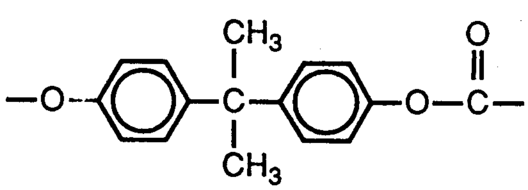

The poycarbonate resin to be used in the present invention preferably has an inherent viscosity of from

about 0.3 to about 1.0 dl/g, more preferably from about 0.3 to to about 0.45 dl/g, when measured in methylene chloride at a concentration of about 0.1% by weight at 20 °C.

The polycarbonate resin is well known and is described in many patents such as U.S Patent Nos. 3,028,365 and 3,334,154. Thus, there is no need to describe this polycarbonate resin in detail. The contents of U.S. Patent Nos. 3,028,365 and 3,334,154 are referred in this specification.

Next, the polyarylate-base resin (E) for use in the present invention is described.

The polyarylate-based resin (E) for use in the present invention comprises a resin (E-1) containing more than or equal to 70% by weight of a polyarylate resin component and/or a mixture (E-2) containing more than or equal to 70% by weight of a polyarylate resin and other polymer compound.

The polyarylate resin component which constitutes the resin (E-1) consists of units derived from terephthalic acid and isophthalic acid (and derivatives thereof) and other units derived from the unit of bisphenols represented by the following formula XIII and their derivatives:

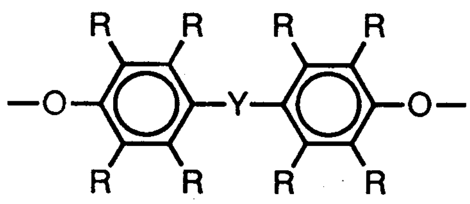

XIII

wherein Y represents a lower alkylene group having from 1 to 4 carbon atoms,

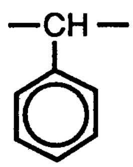
,
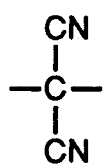
,
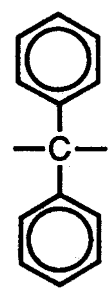

$-SO_2-$, -O-, -S-, or

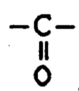
,

wherein part or all of the hydrogen atoms in Y may be substituted with a halogen atom, and Rs independently represent hydrogen atom, a halogen atom, a lower alkyl group having from 1 to 4 carbon atoms and may be the same or different from each other.

More particularly, the polyarylate resin component consists of units XI, XII and XIII represented by the following formulae.

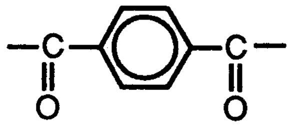

XI

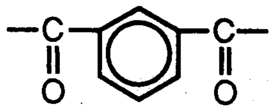

XII

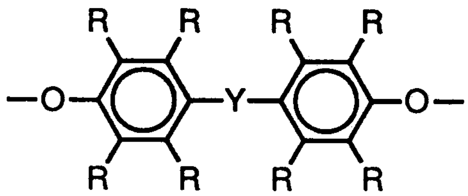

XIII

Derivatives of terephthalic acid and isophthalic acid from which the units XI and XII are derived include acid halide compounds such as terephthalic acid dichloride, isophthalic acid dichloride and the like, and diester compounds such as dimethyl terephthalate, dimethyl isophthalate, diphenyl terephthalate, diphenyl isophthalate and the like.

Terephthalic acid, isophthalic acid and derivatives thereof for use in the present invention may be substituted, at part or all of the hydrogen atoms of the phenylene group, with a halogen atom or a lower alkyl group.

Examples of the bisphenols from which the aforementioned unit XIII is derived include 2,2-bis(4-hydroxyphenyl)propane, bis(4-hydroxyphenyl)methane, 4,4'-dihydroxydiphenyl ether, bis(4-hydroxyphenyl)-sulfide, bis(4-hydroxyphenyl)sulfone, bis(4-hydroxyphenyl)ketone, bis(4-hydroxy-3-methylphenyl)methane, bis(4-hydroxy-3,5-dibromophenyl)methane, 1,1-bis(4-hydroxyphenyl) ethane, 2,2-bis(4-hydroxy-3-methylphenyl)propane, 2,2-bis(4-hydroxy-3,5-dimethylphenyl)propane, 2,2-bis(4-hydroxy-3,5-dichlorophenyl) propane, 2,2-bis(4-hydroxy-3,5-dibromophenyl)propane, 2,2-bis(4-hydroxyphenyl)butane, bis(4-hydroxyphenyl)-phenyl methane, bis(4-hydroxyphenyl)diphenylmethane, bis(4-hydroxyphenyl)difluoromethane and the like.

Of these, 2,2-bis(4-hydroxyphenyl)propane which is usually called bisphenol A is preferred because of the ease in availability of starting materials.

If necessary, a small amount of aromatic dihydroxy compounds such as, for example, 4,4'-biphenol, 2,6-naphthalenediol, hydroquinone, chlorohydroquinone and the like, may be used in combination with the bisphenols.

The resin (E-1) containing more than or equal to 70% by weight of a polyarylate resin component for use in the present invention is a resin in which the aforementioned units XI, XII and XIII are contained in an amount of more than or equal to 70% by weight.

Illustrative examples of such resins are a polyarylate resin consisting essentially of units XI, XII and XIII. In addition to the resins prepared from compounds which give units XI, XII and XIII such as terephthalic acid, isophthalic acid, bisphenols represented by the foregoing formula XI and derivatives thereof, other resins obtained by copolymerizing aromatic dicarboxylic acids, such as polyethylene terephthalate, 2,6-naphthalenedicarboxylic acid and 4,4'-diphenyldicarboxylic acid, and derivatives thereof, and aromatic hydroxycarboxylic acids, such as para-acetoxybenzoic acid and 2-hydroxy-6-naphthoic acid, and derivatives thereof may also be used as the polyarylate-based resin when these resins contain not less than 70 wt% of a polyarylate resin component consisting of the above three units XI, XII and XIII.

When the resin (E-1) containing more than or equal to 70% by weight of a polyarylate resin component is synthesized, material compounds from which each of the units XI through XIII is derived may be used alone or as a mixture of two or more.

The resin (E-1) for use in the present invention may be prepared by any methods including an interfacial polymerization method, a solution polymerization method and a melt polymerization method.

The mixture of a polyarylate resin and other resin in which more than or equal to 70% by weight of the polyarylate resin is contained (E-2) is a mixture prepared from a polyarylate resin consisting essentially of the units XI, XII and XIII and other resins. Examples of such mixtures include:
a mixture of the polyarylate resin and the polycarbonate resin of the recurring units of the following formula

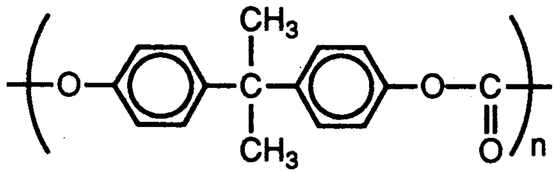

,

a mixture of the polyarylate resin and the polyphenylene sulfide resin of the recurring units of the following formula

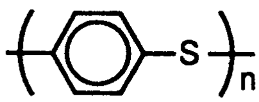

,

a mixture of the polyarylate resin and the polyphenylene oxide resin of the recurring units of the following formula

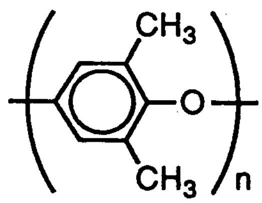

,

a mixture of the polyarylate resin and the polyether sulfone resin of the recurring units of the following formula

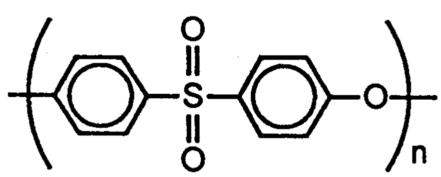

,

a mixture of the polyarylate resin and a polyethylene terephthalate resin, a mixture of the polyarylate resin and a polybutylene terephthalate resin,
a mixture of the polyarylate resin and a polyester polycarbonate resin, a mixture of the polyarylate resin and an aromatic liquid crystalline polyester resin, a mixture of the polyarylate resin and a polyether ketone resin, and a mixture of the polyarylate resin and a polyether ether ketone resin, provided that each of these mixtures contain more than or equal to 70% by weight of the polyarylate resin.

Next, the polyethersulfone resin (F) to be used in the present invention is described.

The polyethersulfone resin (F) to be used in the present invention has a recurring unit represented by the following formula XIV.

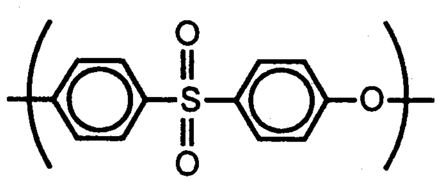

XIV

The polyethersulfone resin (F) is well known and can be produced by polymerizing 4-(4-chlorophenylsulfonyl)phenol, as disclosed for instance in British Patent No. 1,153,035.

Since the polyethersulfone resin (F) is characterized by the absence of aliphatic groups in its structure, it has excellent oxidation resistance and capacity to keep mechanical strength at high temperature. The polyethersulfone resin (F) is possessed of a heat deflection temperature of about 200 °C.

Next, the polysulfone resin (G) to be used in the present invention is described.

The polysulfone resin (G) is well known and is described for example in a report "A High Application Temperature Polyarylsulfone Resin" which has been reported by Kwiatkowski *et al.* at an S.P.E. congress held in Cleveland, Ohio, U.S.A. in October, 1976, as well as in U.S.Patent Nos. 4,088,626 and 4,119,607. The polysulfone resin (G) is available from Union Carbide Corp. under the trademark of UDEL® and has a recurring unit represented by the following formula XV.

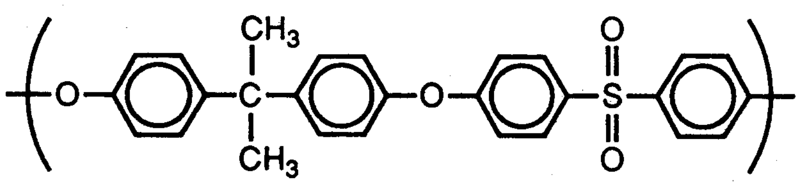

XV

This polymer can be produced by copolymerization of 4,4'-dichlorodiphenylsulfone and bisphenol A. The polysulfone has a heat deflection temperature of about 175 °C.

According to the first aspect of the present invention, there is provided a resin composition which comprises the aforementioned liquid crystalline polyester resin (A) and the aforementioned polycarbonate resin (D) in which 45 to 95% by weight, preferably 50 to 90% by weight, of the total amount of the liquid crystalline polyester resin (A) and the polycarbonate resin (D) is the liquid crystalline polyester resin (A).

According to the second aspect of the present invention, there is provided a resin composition which comprises the aforementioned liquid crystalline polyester resin (B) and the aforementioned polycarbonate resin (D) in which 45 to 95% by weight, preferably 50 to 90% by weight, of the total amount of the liquid crystalline polyester resin (B) and the polycarbonate resin (D) is the liquid crystalline polyester resin (B).

According to the third aspect of the present invention, there is provided a resin composition which comprises the aforementioned liquid crystalline polyester resin (C) and the aforementioned polycarbonate resin (D) in which 45 to 95% by weight, preferably 50 to 90% by weight, of the total amount of the liquid crystalline polyester resin (C) and the polycarbonate resin (D) is the liquid crystalline polyester resin (C).

According to the fourth aspect of the present invention, there is provided a resin composition which comprises at least two liquid crystalline polyester resins selected from the aforementioned liquid crystalline polyester resin (A), the aforementioned liquid crystalline polyester resin (B) and the aforementioned liquid crystalline polyester resin (C), and the aforementioned polycarbonate resin (D), in which 45 to 95% by weight, preferably 50 to 90% by weight, of the total amount of the liquid crystalline polyester resins and the polycarbonate resin (D) is the liquid crystalline polyester resins.

In this instance, the term "at least two liquid crystalline polyester resins selected from the liquid crystalline polyester resin (A), the liquid crystalline polyester resin (B) and the liquid crystalline polyester resin (C)" means a mixture of at least two of the liquid crystalline polyester resins (A), (B) and (C).

If the amount of the liquid crystalline polyester resin (at least one of the liquid crystalline polyester resins (A), (B) and (C)) in the resin composition of the present invention exceeds 95% by weight of the total amount of the liquid crystalline polyester resin and the polycarbonate resin, the resin composition will exhibit outstanding anisotropy with respect to mechanical strength, while less than 45% by weight of the total amount will result in poor dimensional stability of the resin composition.

According to the fifth aspect of the present invention, there is provided a resin composition which comprises the aforementioned liquid crystalline polyester resin (A) and the aforementioned polyarylate-based resin (E) in which 45 to 95% by weight, preferably 50 to 90% by weight, of the total amount of the liquid crystalline polyester resin (A) and the polyarylate-based resin (E) is the liquid crystalline polyester resin (A).

According to the sixth aspect of the present invention, there is provided a resin composition which comprises the aforementioned liquid crystalline polyester resin (B) and the aforementioned polyarylate-based resin (E) in which 45 to 95% by weight, preferably 50 to 90% by weight, of the total amount of the liquid crystalline polyester resin (B) and the polyarylate-based resin (E) is the liquid crystalline polyester resin (B).

According to the seventh aspect of the present invention, there is provided a resin composition which comprises the aforementioned liquid crystalline polyester resin (C) and the aforementioned polyarylate-based resin (E) in which 45 to 95% by weight, preferably 50 to 90% by weight, of the total amount of the liquid crystalline polyester resin (C) and the polyarylate-based resin (E) is the liquid crystalline polyester resin (C).

According to the eighth aspect of the present invention, there is provided a resin composition which comprises at least two liquid crystalline polyester resins selected from the aforementioned liquid crystalline polyester resin (A), the aforementioned liquid crystalline polyester resin (B) and the aforementioned liquid crystalline polyester resin (C), and the aforementioned polyarylate-based resin (E), in which 45 to 95% by weight, preferably 50 to 90% by weight, of the total amount of the liquid crystalline polyester resins and the polyarylate-based resin (E) is the liquid crystalline polyester resins.

In this instance, the term "at least two liquid crystalline polyester resins selected from the liquid crystalline polyester resin (A), the liquid crystalline polyester resin (B) and the liquid crystalline polyester resin (C)" means a mixture of at least two of the liquid crystalline polyester resins (A), (B) and (C).

If the amount of the liquid crystalline polyester resin (at least one of the liquid crystalline polyester resins (A), (B) and (C)) in the resin composition of the present invention exceeds 95% by weight of the total amount of the liquid crystalline polyester resin and the polyarylate-based resin, the resin composition will exhibit outstanding anisotropy with respect to mechanical strength, while less than 45% by weight of the total amount will result in poor dimensional stability of the resin composition.

According to the ninth aspect of the present invention, there is provided a resin composition which comprises the aforementioned liquid crystalline polyester resin (A) and the aforementioned polyethersulfone resin (F) in which 45 to 95% by weight, preferably 50 to 90% by weight, of the total amount of the liquid crystalline polyester resin (A) and the polyethersulfone resin (F) is the liquid crystalline polyester resin (A).

According to the tenth aspect of the present invention, there is provided a resin composition which comprises the aforementioned livid crystalline polyester resin (B) and the aforementioned polyethersulfone resin (F) in which 45 to 95% by weight, preferably 50 to 90% by weight, of the total amount of the liquid crystalline polyester resin (B) and the polyethersulfone resin (F) is the liquid crystalline polyester resin (B).

According to the eleventh aspect of the present invention, there is provided a resin composition which comprises the aforementioned liquid crystalline polyester resin (C) and the aforementioned polyethersulfone resin (F) in which 45 to 95% by weight, preferably 50 to 90% by weight, of the total amount of the liquid crystalline polyester resin (C) and the polyethersulfone resin (F) is the liquid crystalline polyester resin (C).

According to the twelfth aspect of the present invention, there is provided a resin composition which comprises at least two liquid crystalline polyester resins selected from the aforementioned liquid crystalline polyester resin (A), the aforementioned liquid crystalline polyester resin (B) and the aforementioned liquid crystalline polyester resin (C), and the aforementioned polyethersulfone resin (F), in which 45 to 95% by weight, preferably 50 to 90 % by weight of the total amount of the liquid crystalline polyester resins and the polyethersulfone resin (F) is the liquid crystalline polyester resins.

In this instance, the term "at least two liquid crystalline polyester resins selected from the liquid crystalline polyester resin (A), the liquid crystalline polyester resin (B) and the liquid crystalline polyester resin (C)" means a mixture of at least two of the liquid crystalline polyester resins (A), (B) and (C).

If the amount of the liquid crystalline polyester resin (at least one of the liquid crystalline polyester resins (A), (B) and (C)) in the resin composition of the present invention exceeds 95% by weight of the total amount of the liquid crystalline polyester resin and the polyethersulfone resin (F), the resin composition will exhibit outstanding anisotropy with respect to mechanical strength, while less than 45% by weight of the total amount will result in poor dimensional stability of the resin composition.

According to the thirteenth aspect of the present invention, there is provided a resin composition which comprises the aforementioned liquid crystalline polyester resin (A) and the aforementioned polysulfone resin (G) in which 45 to 95% by weight, preferably 50 to 90% by weight, of the total amount of the liquid crystalline polyester resin (A) and the polysulfone resin (G) is the liquid crystalline polyester resin (A).

According to the fourteenth aspect of the present invention, there is provided a resin composition which comprises the aforementioned liquid crystalline polyester resin (B) and the aforementioned polysulfone resin (G) in which 45 to 95% by weight, preferably 50 to 90% by weight, of the total amount of the liquid crystalline polyester resin (B) and the polysulfone resin (G) is the liquid crystalline polyester resin (B).

According to the fifteenth aspect of the present invention, there is provided a resin composition which comprises the aforementioned liquid crystalline polyester resin (C) and the aforementioned polysulfone resin (G) in which 45 to 95% by weight, preferably 50 to 90% by weight, of the total amount of the liquid crystalline polyester resin (C) and the polysulfone resin (G) is the liquid crystalline polyester resin (C).

According to the sixteenth aspect of the present invention, there is provided a resin composition which

comprises at least two liquid crystalline polyester resins selected from the aforementioned liquid crystalline polyester resin (A), the aforementioned liquid crystalline polyester resin (B) and the aforementioned liquid crystalline polyester resin (C), and the aforementioned polysulfone resin (G), in which 45 to 95% by weight, preferably 50 to 90 % by weight of the total amount of the liquid crystalline polyester resins and the polysulfone resin (G) is the liquid crystalline polyester resins.

In this instance, the term "at least two liquid crystalline polyester resins selected from the liquid crystalline polyester resin (A), the liquid crystalline polyester resin (B) and the liquid crystalline polyester resin (C)" means a mixture of at least two of the liquid crystalline polyester resins (A), (B) and (C).

If the amount of the liquid crystalline polyester resin (at least one of the liquid crystalline polyester resins (A), (B) and (C)) in the resin composition of the present invention exceeds 95% by weight of the total amount of the liquid crystalline polyester resin and the polysulfone resin (G), the resin composition will exhibit outstanding anisotropy with respect to mechanical strength, while less than 45% by weight of the total amount will result in poor dimensional stability of the resin composition.

In addition to the liquid crystalline polyester resin [at least one of the liquid crystalline polyester resins (A), (B) and (C)] and the polycarbonate resin (D) or the polyarylate-based resin (E) or the polyethersulfone resin (F) or the polysulfone resin (G) as the essential components, the resin composition of the present invention may further contain other components in such amounts that they do not spoil the object of the present invention.

Examples of these additional components include: resins other than the resins of this invention; fibrous reinforcing agents such as glass fibers and carbon fibers; inorganic powdery fillers such as talc, mica and calcium carbonate; antioxidants; anticoloring agents; stabilizers; UV absorbers; plasticizers; lubricants such as molybdenum disulfide, silicon oil, fluoro resins and graphite; and flame retardants such as tetrabromobisphenol-A and antimony trioxide.

For the production of the resin composition according to the present invention, any method of melt kneading the liquid crystalline polyester resin and the polycarbonate resin or the polyarylate-based resin or the polyethersulfone resin or the polysulfone resin, together with other ingredients when required, may be used without limitation. For instance, the melt kneading may be carried out by the use of a single-screw extruder, a twin-screw extruder, a Banbury mixer, a roll mill, a Brabender, a kneader and the like.

The resin composition of the present invention may also be obtained by other means such as a method in which the liquid crystalline polyester resin in a molten state is mixed with the polycarbonate resin or the polyarylate-based resin or the polyethersulfone resin or the polysulfone resin in a reactor and a method in which the liquid crystalline polyester resin and the polycarbonate resin or the polyarylate-based resin or the polyethersulfone resin or the polysulfone resin are molded by melting and mixing them in a molding machine.

## EXAMPLES

The following examples are provided for the purpose of further illustrating the present invention but are in no way to be taken as limiting.

### (1) Preparation of test specimens

A liquid crystalline polyester resin and a polycarbonate resin or a polyarylate-based resin or a polyethersulfone resin or a polysulfone resin were charged in specified proportions into a single-screw 20 mmØ extruder (product of Thermoplastic Kogyo Co., Ltd.) and kneaded. The pellets thus obtained were fed into an injection molding machine (Model SAV-60-52 of Sanjo Seiki Seisakusho Co., Ltd.) and specimens to be tested for the following physical properties were obtained.

### (2) Evaluation of dimensional stability

Coefficient of linear expansion at -30 to $+30^{\circ}$C was measured in accordance with ASTM D-696.

### (3) Evaluation of anisotropy

Using test specimens molded into flat plates (120 mm x 120 mm x 2 mm) and cutting them into the 14 mm-wide spieces in a resin flow direction or machine direction (MD) and in a direction transverse to the machine direction (TD) in order to determine the bending strengths, the ratio of the bending strengths (MD/TD) was calculated.

(4) Evaluation of heat resistance (heat distortion temperature: HDT)

The measurement was made in accordance with ASTM D-648 at a load of 18.6 $kg/cm^2$.

(5) Molding temperature

Cylinder temperature at the time of injection molding was used as the molding temperature.

(6) Izod impact test (with notch)

Conducted in accordance with ASTM D256

(7) Synthesis of liquid crystalline polyester resin (LCP)

i) LCP-1

A 5 liter capacity glass reactor equipped with an argon inlet tube, a stirrer having a torque meter and revolution meter and a thermometer was charged with 6.66 mol (1200 g) of p-acetoxybenzoic acid, 0.334 mol (55.4 g) of isophthalic acid, 0.778 mol (129 g) of terephthalic acid, 1.112 mol (240 g) of 2,6-naphthalenedicarboxylic acid and 2.22 mol (600 g) of 4,4'-diacetoxybiphenyl. The reactor was fully purged with argon before it was heated to 250 °C over about 30 minutes. Stirring was started when the contents were melted.

Shortly after acetic acid started stripping out, the temperature was raised to 280 °C spending 10 minutes and the reaction was carried out at this temperature level for 30 minutes. The temperature was further raised to 300 °C spending 10 minutes and the reaction was continued at this temperature level for 30 minutes.

After further raising the temperature to 310 °C spending 10 minutes, the pressure was gradually reduced spending about 20 minutes to a final vacuum of 1 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-1) was pulverized into mean particle size of 6 mm for further use.

ii) LCP-2

The process for the synthesis of LCP-1 was repeated to obtain a liquid crystalline polyester resin except that 6.66 mol (1200 g) of p-acetoxybenzoic acid, 0.334 mol (60 g) of m-acetoxybenzoic acid, 1.026 mol (170.4 g) of terephthalic acid, 1.028 mol (222 g) of 2,6-naphthalenedicarboxylic acid and 2.056 mol (555 g) of 4,4'-diacetoxybiphenyl were used as the starting materials. The liquid crystalline polyester resin thus obtained (LCP-2) was pulverized into mean particle size of 6 mm for further use.

iii) LCP-3

A polymerization reactor equipped with an argon inlet tube, a stirrer having a torque meter and revolution meter and a thermometer was charged with 9.12 mol (1642 g) of p-acetoxybenzoic acid, 0.48 mol (80 g) of isophthalic acid, 1.12 mol (186 g) of terephthalic acid, 1.6 mol (346 g) of 2,6-naphthalenedicarboxylic acid, 3.2 mol (864 g) of 4,4'-diacetoxybiphenyl and 0.48 mol (86 g) of p-acetamidobenzoic acid. The reactor was fully purged with argon before it was heated to 260 °C over about 30 minutes. Stirring was started when the contents were melted during the course of the temperature raising.

Acetic acid started stripping out at around 230 °C. The reaction was carried out at 260 °C for 1 hour, at 280 °C for 1 hour and then at 300 °C for 1 hour. After further raising the temperature to 320 °C, the pressure was gradually reduced to a final vacuum of 0.5 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-3) was pulverized into mean particle size of 6 mm for further use.

iv) LCP-4

The process for the synthesis of LCP-3 was repeated to obtain a liquid crystalline polyester resin except that 9.6 mol (1728 g) of p-acetoxybenzoic acid, 0.48 mol (86.4 g) of m-acetoxybenzoic acid, 1.48 mol (246 g) of terephthalic acid, 1.48 mol (320 g) of 2,6-naphthalenedicarboxylic acid, 2.16 mol (583 g) of 4,4'-diacetoxybiphenyl and 0.8 mol (154 g) of 4-acetoxyacetoanilide were used as the starting materials. The liquid crystalline polyester resin thus obtained (LCP-4) was pulverized into mean particle size of 6 mm for further use.

v) LCP-5

A polymerization reactor equipped with an argon inlet tube, a stirrer having a torque meter and revolution meter and a thermometer was charged with 2.08 mol (400 g) of a polyethylene terephthalate having a logarithmic viscosity of 0.72 as measured in a mixture of 50/50 (weight ratio) phenol/tetrachloroethane in a concentration of 0.5 g/dl at 30°C, 1.76 mol (476 g) of 4,4'-diacetoxybiphenyl, 1.76 mol (292 g) of terephthalic acid, 10.24 mol (1843 g) of p-acetoxybenzoic acid and 0.16 mol (28.6 g) of p-acetamidobenzoic acid. The reactor was fully purged with argon before it was heated to 260°C over about 30 minutes. Stirring was started when the contents were melted during the course of the temperature raising.

Acetic acid started stripping out at around 230°C. The reaction was carried out at 260°C for 1 hour, at 280°C for 1 hour and then at 300°C for 1 hour. After further raising the temperature to 320°C, the pressure was gradually reduced to a final vacuum of 0.5 mmHg and the polymerization reaction was continued under these conditions.

The polymerisation reaction was completed when the reaction mixture reached a predetermined torque value at a predetermined stirring revolution.

The liquid crystalline polyester resin thus obtained (LCP-5) was pulverized into mean particle size of 6 mm for further use.

vi) LCP-6

A 5 liter capacity glass reactor equipped with an argon inlet tube, a stirrer having a torque meter and revolution meter and a thermometer was charged with 4.44 mol (799.2 g) of p-acetoxybenzoic acid, 1.76 mol (503.2 g) of 1,2-bis(p-carboxyphenoxy)ethane, 1.67 mol (275.7 g) of terephthalic acid and 3.33 mol (693.8 g) of methylhydroquinonediacetate. The reactor was fully purged with argon before it was heated to 250°C over about 30 minutes. Stirring was started when the contents were melted.

Shortly after acetic acid started stripping out, the temperature was raised to 280°C spending 10 minutes and the reaction was carried out at this temperature level for 30 minutes. The temperature was further raised to 300°C spending 10 minutes and the reaction was continued at this temperature level for 30 minutes.

After further raising the temperature to 320°C spending 10 minutes, the pressure was gradually reduced spending about 20 minutes to a final vacuum of 1 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-6) was pulverized into mean particle size of 6 mm for further use.

vii) LCP-7

The process for the synthesis of LCP-6 was repeated to obtain a liquid crystalline polyester resin except that 6.66 mol (1200 g) of p-acetoxybenzoic acid, 2.22 mol (542.3 g) of 2,6-diacetoxynaphthaleneand 2.22 mol (368.9 g) of terephthalic acid were used as the starting materials. The liquid crystalline polyester resin thus obtained (LCP-7) was pulverized into mean particle size of 6 mm for further use.

viii) LCP-8

A polymerization reactor equipped with an argon inlet tube, a stirrer having a torque meter and revolution meter and a thermometer was charged with 2.4 mol (461.5 g) of a polyethylene terephthalate

having a logarithmic viscosity of 0.72 as measured in a mixture of 50/50 (weight ratio) phenol/tetrachloroethane in a concentration of 0.5 g/dl at 30 °C, 0.8 mol (216.4 g) of 4,4'-diacetoxybiphenyl, 0.8 mol (132.7 g) of terephthalic acid and 12.0 mol (2159.8 g) of p-acetoxybenzoic acid. The reactor was fully purged with argon before it was heated to 260 °C over about 30 minutes. Stirring was started when the contents were melted during the course of the temperature raising.

Acetic acid started stripping out at around 230 °C. The reaction was carried out at 260 °C for 1 hour, at 280 °C for 1 hour and then at 300 °C for 1 hour. After further raising the temperature to 320 °C, the pressure was gradually reduced to a final vacuum of 0.5 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-8) was pulverized into mean particle size of 6 mm for further use.

ix) LCP-9

The process for the synthesis of LCP-8 was repeated to obtain a liquid crystalline polyester resin except that 12.0 mol (2159.8 g) of p-acetoxybenzoic acid, 2.0 mol (331.8 g) of terephthalic acid, 1.0 mol (270.5 g) of 4,4'-diacetoxybiphenyl and 1.0 mol (198.9 g) of 2,6-diacetoxynaphthalene were used as the starting materials. The liquid crystalline polyester resin thus obtained (LCP-9) was pulverized into mean particle size of 6 mm for further use.

x) LCP-10

A 5 liter capacity glass reactor equipped with an argon inlet tube, a stirrer having a torque meter and revolution meter and a thermometer was charged with 5.55 mol (1000 g) of p-acetoxybenzoic acid, 0.70 mol (115.4 g) of isophthalic acid, 2.08 mol (345.5 g) of terephthalic acid and 2.78 mol (750 g) of 4,4'-diacetoxybiphenyl. The reactor was fully purged with argon before it was heated to 250 °C over about 30 minutes. Stirring was started when the contents were melted.

Shortly after acetic acid started stripping out, the temperature was raised to 280 °C spending 10 minutes and the reaction was carried out at this temperature level for 30 minutes. The temperature was further raised to 330 °C spending 10 minutes and the reaction was continued at this temperature level for 30 minutes.

After further raising the temperature to 430 °C spending 60 minutes, the pressure was gradually reduced spending about 20 minutes to a final vacuum of 1 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-10) was pulverized into mean particle size of 6 mm for further use.

xi) LCP-11

A polymerization reactor equipped with an argon inlet tube, a stirrer having a torque meter and revolution meter and a thermometer was charged with 4.0 mol (720 g) of p-acetoxybenzoic acid and 6.0 mol (1380 g) of 6-acetoxy-2-naphthoic acid. The reactor was fully purged with argon before it was heated to 250 °C over about 30 minutes. Stirring was started when the contents were melted.

Shortly after acetic acid started stripping out, the temperature was raised to 280 °C spending 10 minutes and the reaction was carried out at this temperature level for 30 minutes. The temperature was further raised to 300 °C spending 10 minutes and the reaction was continued at this temperature level for 30 minutes.

After further raising the temperature to 320 °C spending 10 minutes, the pressure was gradually reduced spending about 20 minutes to a final vacuum of 1 mmHg and the polymerization reaction was continued under these conditions.

The polymerization reaction was completed when the reaction mixture reached a predetermined torque value at a predetermined stirring revolution.

The liquid crystalline polyester resin thus obtained (LCP-11) was pulverized into mean particle size of 6 mm for further use.

xii) LCP-12

The process for the synthesis of LCP-11 was repeated to obtain a liquid crystalline polyester resin except that 6.0 mol (1380 g) of 6-acetoxy-2-naphthpic acid, 2.0 mol (386.1 g) of p-acetoxyacetanilide, and 2.0 mol (332.0 g) of terephthalic acid were used as the starting materials. The liquid crystalline polyester resin thus obtained (LCP-12) was pulverized into mean particle size of 6 mm for further use.

xiii) LCP-13

The process for the synthesis of LCP-11 was repeated to obtain a liquid crystalline polyester resin except that 6.0 mol (1080.7 g) of p-acetoxybenzoic acid, 1.0 mol (216.1 g) of 2,6-naphthalenedicarboxylic acid, 2.0 mol (391.6 g) of hydroquinonediacetate and 1.0 mol (166.1 g) of isophthalic acid were used as the starting materials. The liquid crystalline polyester resin thus obtained (LCP-13) was pulverized into mean particle size of 6 mm for further use.

xiv) LCP-14

The liquid crystalline polyester resins LCP-1 and LCP-5 were mixed in a weight ratio of 50:50 by a single-screw 20 mmØ extruder to obtain a liquid crystalline polyester resin LCP-14.

(Examples 1 to 7)

Each of the thus obtained liquid crystalline polyester resins (LCP-1 to LCP-5) and a polycarbonate resin (NOVAREX 7025A, product of Mitsubishi Kasei Corp.) were mixed in different mixing ratios as indicated in Table 1 to obtain pellets. The resulting pellets of the respective mixtures were molded by means of an injection molding machine into test pieces for the evaluation of their physical properties. The results are shown in Table 1.

(Comparative Examples 1 to 11)

Each of the liquid crystalline polyester resins (LCP-1 to LCP-9) and the polycarbonate resin used in Examples 1 to 7 were mixed in different mixing ratios as indicated in Table 1 to obtain pellets. The resulting pellets of the respective mixtures were molded by means of an injection molding machine into test pieces for the evaluation of their physical properties. The results are shown in Table 1.

(Example 30 and Comparative Example 43)

The liquid crystalline polyester resin (LCP-14) and a polycarbonate resin (NOVAREX 7025A, product of Mitsubishi Kasei Corp.) were mixed in a mixing ratio indicated in Table 1 to obtain pellets. The resulting pellets were molded by means of an injection molding machine into test pieces for the evaluation of their physical properties. The results are shown in Table 1 (Inventive 30).

Example 30 was repeated in the same conditions except that the polycarbonate resin was not used. The evaluations of the physical properties of the thus obtained test pieces are shown in Table 1 (Comparative 43).

In spite of the excellent heat resistance and mechanical strength, the resin compositions of Comparative Examples 1, 3, 4, 5, 6 and 43 showed strong anisotropy (2.0 or more in terms of MD/TD) when compared to the resin compositions obtained in Examples 1 to 5. The resin compositions of Comparative Examples 2 and 7, on the other hand, showed low heat resistance and mechanical strength and inferior dimensional stability ($10^{-5}$ level in terms of the coefficient of linear expansion) in spite of their mitigated anisotropy. These resin compositions obtained in Comparative Examples 1 to 7, therefore, cannot be regarded as compositions having well balanced physical properties.

The resin compositions obtained in Comparative Examples 8, 9, 10 and 11 show mitigated anisotropy but having low heat resistance and mechanical strength, therefore, they cannot be regarded as compositions having well balanced physical properties when compared to the resin compositions obtained in Examples 2, 4, 5, 6, 7 and 30.

(Examples 8 to 14)

Each of the liquid crystalline polyester resins obtained above (LCP-1 to LCP-5) and a polyarylate-based resin (Polyarylate Resin U-100, product of Unitika, Ltd.) were mixed in different mixing ratios indicated in Table 2 to obtain pellets. The resulting pellets of the respective mixtures were molded by means of an injection molding machine into test pieces for the evaluation of their physical properties. The results are shown in Table 2.

(Comparative Examples 12 to 21)

Each of the liquid crystalline polyester resins obtained above (LCP-1 to 5 and LCP-10, 11 and 12) and the polyarylate-based resin used in Examples 8 to 14 were mixed in different mixing ratios indicated in Table 2 to obtain pellets. The resulting pellets of the respective mixtures were molded by means of an injection molding machine into test pieces for the evaluation of their physical properties. The results are shown in Table 2.

(Example 15 and Comparative Example 42)

A polyarylate-based resin (Polyarylate Resin U-100, product by Unitika, Ltd.) and a polyethylene terephthalate resin (TR4550BH, product of Teisin Co.) were mixed in a mixing weight ratio of 80:20 by a single-screw 20 mmØ extruder to obtain the polyarylate resin (PAR-2).

The thus obtained polyarylate resin PAR-2 and the liquid polyesther resin LCP-5 were mixed in a mixing ratio indicated in Table 2 to obtain pellets. The resulting pellets were molded by means of an injection molding machine into test pieces for the evaluations of the physical properties. The results are shown in Table 2 (Inventive 15).

Example 15 was repeated in the same conditions except that the liquid polyesther resin LCP-5 was not used. The evaluation of the physical properties of the thus obtained test pieces are shown in Table 2 (Comparative 42).

(Example 31 and Comparative Example 44).

The liquid crystalline polyester resin (LCP-14) and a polyarylate-based resin (Polyarylate-based Resin U-100, product of Unitika, Ltd.) were mixed in a mixing ratio indicated in Table 2 to obtain pellets. The resulting pellets were molded by means of an injection molding machine into test pieces for the evaluation of their physical properties. The results are shown in Table 2 (Inventive 31).

Example 31 was repeated in the same conditions except that the polyarylate-based resin was not used. The evaluations of the physical properties of the thus obtained test pieces are shown in Table 2 (Comparative 44).

Compared to the resin compositions obtained in Examples 8 to 15 and 31, each of the resin compositions obtained in Comparative Examples 12 to 21, 42 and 44 is possessed of unbalanced physical properties; for instance, the compositions obtained in Comparative Examples 12, 14, 15, 16, 17 and 44 have high heat resistance and mechanical strength but with strong anisotropy, those obtained in Comparative Examples 13, 18 and 42 shows mitigated anisotropy but with inferior heat resistance, mechanical strength and dimensional stability, the resin composition of Comparative Example 19 has a high heat resistance but with inferior mechanical properties and extremely high molding temperature. Compared to the resin compositions obtained in Examples 9, 11, 12, 13, 14, 15 and 31, those compositions obtained in Comparative Examples 20 and 21 show mitigated anisotropy but with inferior heat resistance and mechanical strength.

(Examples 16 to 22)

Each of the liquid crystalline polyester resins obtained above (LCP-1 to LCP-5) and a polysulfone resin (UDEL Polysulfone P-1700, product of Nissan Chemical Industries, Ltd.) were mixed in different mixing ratios indicated in Table 3 to obtain pellets. The resulting pellets of the respective mixtures were molded by means of an injection molding machine into test pieces for the evaluation of their physical properties. The results are shown in Table 3.

(Comparative Examples 22 to 31)

Each of the liquid crystalline polyester resins obtained above (LCP-1 to 7 and 13) and the polysulfone

resin used in Examples 16 to 22 were mixed in different mixing ratios indicated in Table 3 to obtain pellets. The resulting pellets of the respective mixtures were molded by means of an injection molding machine into test pieces for the evaluation of their physical properties. The results are shown in Table 3.

(Example 32 and Comparative Example 45)

The liquid crystalline polyester resin (LCP-14) and a polysulfone resin (UDEL Polysulfone P-1700, product of Nissan Chemical Industries, Ltd.) were mixed in a mixing ratio indicated in Table 3 to obtain pellets. The resulting pellets were molded by means of an injection molding machine into test pieces for the evaluation of their physical properties. The results are shown in Table 3 (Inventive 32).

Example 32 was repeated in the same conditions except that the polysulfone resin was not used. The evaluations of the physical properties of the thus obtained test pieces are shown in Table 3 (Comparative 45).

Compared to the resin compositions obtained in Examples 16 to 22 and 32, each of the resin compositions obtained in Comparative Examples 22 to 31 and 45 is possessed of unbalanced physical properties; for instance, the compositions obtained in Comparative Examples 22, 24, 25, 26, 27 and 45 have high heat resistance and mechanical strength but with strong anisotropy, those obtained in Comparative Examples 23 and 28 shows mitigated anisotropy but with inferior heat resistance, mechanical strength and dimensional stability. Compared to the resin copositions obtained in Examples 17, 19, 20, 21, 22 and 32, those compositions obtained in Comparative Examples 29, 30 and 31 show mitigated anisotropy but with inferior heat resistance and mechanical strength.

(Examples 23 to 29)

Each of the liquid crystalline polyester resins obtained above (LCP-1 to LCP-5) and a polyethersulfone resin (VICTREX 4100G, product of Sumitomo Chemical Co., Ltd..) were mixed in different mixing ratios indicated in Table 4 to obtain pellets. The resulting pellets of the respective mixtures were molded by means of an injection molding machine into test pieces for the evaluation of their physical properties. The results are shown in Table 4.

(Comparative Examples 32 to 41)

Each of the liquid crystalline polyester resins obtained above (LCP-1 to 7 and 13) and the polyethersulfone resin used in Examples 23 to 29 were mixed in different mixing ratios indicated in Table 4 to obtain pellets. The resulting pellets of the respective mixtures were molded by means of an injection molding machine into test pieces for the evaluation of their physical properties. The results are shown in Table 4.

(Example 33 and Comparative Example 46)

The liquid crystalline polyester resin (LCP-14) and a polyethersulfone resin (VICTREX 4100G, product of Sumitomo Chemical Co., Ltd.) were mixed in a mixing ratio indicated in Table 4 to obtain pellets. The resulting pellets were molded by means of an injection molding machine into test pieces for the evaluation of their physical properties. The results are shown in Table 4 (Inventive 33).

Example 33 was repeated in the same conditions except that the polyethersulfone resin was not used. The evaluations of the physical properties of the thus obtained test pieces are shown in Table 4 (Comparative 46).

Compared to the resin compositions obtained in Examples 23 to 29 and 33, each of the resin compositions obtained in Comparative Examples 32 to 41 and 46 is possessed of unbalanced physical properties; for instance, the compositions obtained in Comparative Examples 32, 34, 35, 36, 37 and 46 have high heat resistance and mechanical strength but with strong anisotropy, those obtained in Comparative Examples 33 and 38 shows mitigated anisotropy but with inferior heat resistance, mechanical strength and dimensional stability, and those compositions obtained in Comparative Examples 39, 40 and 41 show mitigated anisotropy but with inferior heat resistance and mechanical strength.

Table 1

| Examples | Kind of liquid crystalline polyester resin (LCP) | Composition (weight %) | | Dimensional stability | Anisotropy | | | Heat resistance | Izod impact strength (kg·cm/cm) |
|---|---|---|---|---|---|---|---|---|---|
| | | Liquid crystalline polyester resin | Polycarbonater esin *14 | Coefficient of linear expansion (cm/cm·°C) | Bending strength in MD ($kg/cm^2$) | Bending strength in TD ($kg/cm^2$) | MD/TD | Heat distortion temperature (°C) | |
| Inventive 1 | LCP-1 *1 | 90 | 10 | $10^{-6}$ level | 1400 | 755 | 1.9 | 180 | 35 |
| Inventive 2 | LCP-1 | 70 | 30 | $10^{-6}$ level | 1350 | 780 | 1.7 | 163 | 30 |
| Inventive 3 | LCP-1 | 50 | 50 | $10^{-6}$ level | 1250 | 800 | 1.6 | 152 | 20 |
| Inventive 4 | LCP-2 *2 | 70 | 30 | $10^{-6}$ level | 1350 | 800 | 1.7 | 160 | 30 |
| Inventive 5 | LCP-3 *3 | 70 | 30 | $10^{-6}$ level | 1400 | 810 | 1.7 | 158 | 32 |
| Inventive 6 | LCP-4 *4 | 70 | 30 | $10^{-6}$ level | 1400 | 810 | 1.7 | 155 | 31 |
| Inventive 7 | LCP-5 *5 | 70 | 30 | $10^{-6}$ level | 1350 | 820 | 1.7 | 162 | 30 |
| Comparative 1 | LCP-1 | 100 | 0 | $10^{-6}$ level | 1500 | 600 | 2.5 | 198 | 45 |
| Comparative 2 | LCP-1 | 40 | 60 | $10^{-5}$ level | 1150 | 810 | 1.4 | 144 | 8 |
| Comparative 3 | LCP-2 | 100 | 0 | $10^{-6}$ level | 1500 | 600 | 2.5 | 196 | 43 |
| Comparative 4 | LCP-3 | 100 | 0 | $10^{-6}$ level | 1590 | 740 | 2.1 | 192 | 40 |
| Comparative 5 | LCP-4 | 100 | 0 | $10^{-6}$ level | 1600 | 790 | 2.0 | 184 | 42 |
| Comparative 6 | LCP-5 | 100 | 0 | $10^{-6}$ level | 1500 | 630 | 2.4 | 206 | 40 |
| Comparative 7 | - | 0 | 100 | $10^{-5}$ level | 880 | 880 | 1.0 | 130 | 90 |
| Comparative 8 | LCP-6 *6 | 70 | 30 | $10^{-6}$ level | 950 | 800 | 1.2 | 143 | 5 |
| Comparative 9 | LCP-7 *7 | 70 | 30 | $10^{-6}$ level | 970 | 780 | 1.2 | 142 | 6 |
| Comparative 10 | LCP-8 *8 | 70 | 30 | $10^{-6}$ level | 990 | 700 | 1.4 | 145 | 8 |
| Comparative 11 | LCP-9 *9 | 70 | 30 | $10^{-6}$ level | 980 | 720 | 1.4 | 140 | 8 |
| Inventive 30 | LCP-14 *19 | 70 | 30 | $10^{-6}$ level | 1360 | 800 | 1.7 | 162 | 30 |
| Comparative 43 | LCP-14 *19 | 100 | 0 | $10^{-6}$ level | 1500 | 600 | 2.5 | 200 | 42 |

Table 2

| Examples | Kind of liquid crystalline polyester resin (LCP) | Composition (weight %) | | Dimensional stability | Anisotropy | | | Heat resistance | Molding temp. (°C) | Izod impact strength (kg·cm/cm) |
|---|---|---|---|---|---|---|---|---|---|---|
| | | Liquid crystalline polyester resin | Polyarylate-based resin | Coefficient of linear expansion (cm/cm·°C) | Bending strength in MD ($kg/cm^2$) | Bending strength in TD ($kg/cm^2$) | MD/TD | Heat distortion temperature (°C) | | |
| Inventive 8 | LCP-1 | 90 | 10*15 | $10^{-6}$ level | 1450 | 805 | 1.8 | 192 | 315 | 35 |
| Inventive 9 | LCP-1 | 70 | 30*15 | $10^{-6}$ level | 1400 | 830 | 1.7 | 188 | 318 | 30 |
| Inventive 10 | LCP-1 | 50 | 50*15 | $10^{-6}$ level | 1300 | 850 | 1.5 | 180 | 320 | 20 |
| Inventive 11 | LCP-2 | 70 | 30*15 | $10^{-6}$ level | 1400 | 850 | 1.6 | 190 | 310 | 30 |
| Inventive 12 | LCP-3 | 70 | 30*15 | $10^{-6}$ level | 1450 | 860 | 1.6 | 186 | 308 | 30 |
| Inventive 13 | LCP-4 | 70 | 30*15 | $10^{-6}$ level | 1450 | 860 | 1.6 | 178 | 305 | 31 |
| Inventive 14 | LCP-5 | 70 | 30*15 | $10^{-6}$ level | 1400 | 870 | 1.6 | 195 | 310 | 30 |
| Comparative 12 | LCP-1 | 100 | 0*15 | $10^{-6}$ level | 1500 | 600 | 2.5 | 198 | 303 | 45 |
| Comparative 13 | LCP-1 | 40 | 60*15 | $10^{-5}$ level | 1200 | 860 | 1.4 | 170 | 340 | 6 |
| Comparative 14 | LCP-2 | 100 | 0*15 | $10^{-6}$ level | 1500 | 600 | 2.5 | 196 | 305 | 43 |
| Comparative 15 | LCP-3 | 100 | 0*15 | $10^{-6}$ level | 1590 | 740 | 2.1 | 192 | 303 | 40 |
| Comparative 16 | LCP-4 | 100 | 0*15 | $10^{-6}$ level | 1600 | 790 | 2.0 | 184 | 300 | 42 |
| Comparative 17 | LCP-5 | 100 | 0*15 | $10^{-6}$ level | 1500 | 630 | 2.4 | 206 | 300 | 40 |
| Comparative 18 | - | 0 | 100*15 | $10^{-5}$ level | 980 | 980 | 1.0 | 160 | 360 | 30 |
| Comparative 19 | LCP-10 *10 | 70 | 30*15 | $10^{-6}$ level | 800 | 640 | 1.3 | 230 | 390 | 3 |
| Comparative 20 | LCP-11 *11 | 70 | 30*15 | $10^{-6}$ level | 970 | 760 | 1.3 | 150 | 310 | 8 |
| Comparative 21 | LCP-12 *12 | 70 | 30*15 | $10^{-6}$ level | 950 | 750 | 1.3 | 150 | 305 | 8 |
| Inventive 15 | LCP-5 | 70 | 30*16 | $10^{-6}$ level | 1380 | 900 | 1.5 | 190 | 310 | 28 |
| Comparative 42 | - | 0 | 100*16 | $10^{-5}$ level | 1000 | 1000 | 1.0 | 130 | 320 | 8 |
| Inventive 31 | LCP-14 | 70 | 30*15 | $10^{-6}$ level | 1400 | 850 | 1.7 | 192 | 315 | 30 |
| Comparative 44 | LCP-14 | 100 | 0 | $10^{-6}$ level | 1500 | 600 | 2.5 | 200 | 302 | 42 |

Table 3

| Examples | Kind of liquid crystalline polyester resin (LCP) | Composition (weight %) | | Dimensional stability | Anisotropy | | | Heat resistance | Izod impact strength (kg·cm/cm) |
|---|---|---|---|---|---|---|---|---|---|
| | | Liquid crystalline polyester resin | Polysulfone resin *17 | Coefficient of linear expansion (cm/cm·°C) | Bending strength in MD ($kg/cm^2$) | Bending strength in TD ($kg/cm^2$) | MD/TD | Heat distortion temperature (°C) | |
| Inventive 16 | LCP-1 | 90 | 10 | $10^{-6}$ level | 1450 | 800 | 1.8 | 188 | 33 |
| Inventive 17 | LCP-1 | 70 | 30 | $10^{-6}$ level | 1400 | 900 | 1.6 | 183 | 28 |
| Inventive 18 | LCP-1 | 50 | 50 | $10^{-6}$ level | 1280 | 1000 | 1.3 | 175 | 20 |
| Inventive 19 | LCP-2 | 70 | 30 | $10^{-6}$ level | 1350 | 900 | 1.5 | 185 | 27 |
| Inventive 20 | LCP-3 | 70 | 30 | $10^{-6}$ level | 1400 | 950 | 1.5 | 181 | 29 |
| Inventive 21 | LCP-4 | 70 | 30 | $10^{-6}$ level | 1400 | 950 | 1.5 | 173 | 26 |
| Inventive 22 | LCP-5 | 70 | 30 | $10^{-6}$ level | 1400 | 950 | 1.5 | 190 | 30 |
| Comparative 22 | LCP-1 | 100 | 0 | $10^{-6}$ level | 1500 | 600 | 2.5 | 198 | 45 |
| Comparative 23 | LCP-1 | 40 | 60 | $10^{-5}$ level | 1200 | 1050 | 1.1 | 170 | 6 |
| Comparative 24 | LCP-2 | 100 | 0 | $10^{-6}$ level | 1500 | 600 | 2.5 | 196 | 43 |
| Comparative 25 | LCP-3 | 100 | 0 | $10^{-6}$ level | 1590 | 740 | 2.1 | 192 | 40 |
| Comparative 26 | LCP-4 | 100 | 0 | $10^{-6}$ level | 1600 | 790 | 2.0 | 184 | 42 |
| Comparative 27 | LCP-5 | 100 | 0 | $10^{-6}$ level | 1500 | 630 | 2.4 | 206 | 40 |
| Comparative 28 | - | 0 | 100 | $10^{-5}$ level | 1100 | 1100 | 1.0 | 175 | 9 |
| Comparative 29 | LCP-6 | 70 | 30 | $10^{-6}$ level | 960 | 800 | 1.2 | 150 | 7 |
| Comparative 30 | LCP-7 | 70 | 30 | $10^{-6}$ level | 980 | 820 | 1.2 | 152 | 6 |
| Comparative 31 | LCP-13 *13 | 70 | 30 | $10^{-6}$ level | 980 | 790 | 1.2 | 150 | 7 |
| Inventive 32 | LCP-14 | 70 | 30 | $10^{-6}$ level | 1400 | 930 | 1.5 | 188 | 29 |
| Comparative 45 | LCP-14 | 100 | 0 | $10^{-6}$ level | 1500 | 600 | 2.5 | 200 | 42 |

Table 4

| Examples | Kind of liquid crystalline polyester resin (LCP) | Composition (weight %) | | Dimensional stability | Anisotropy | | | Heat resistance | Izod impact strength (kg·cm/cm) |
|---|---|---|---|---|---|---|---|---|---|
| | | Liquid crystalline polyester resin | Polyether-sulfone resin *18 | Coefficient of linear expansion (cm/cm·°C) | Bending strength in MD (kg/cm$^2$) | Bending strength in TD (kg/cm$^2$) | MD/TD | Heat distortion temperature (°C) | |
| Inventive 23 | LCP-1 | 90 | 10 | $10^{-6}$ level | 1450 | 820 | 1.8 | 198 | 34 |
| Inventive 24 | LCP-1 | 70 | 30 | $10^{-6}$ level | 1400 | 930 | 1.5 | 198 | 29 |
| Inventive 25 | LCP-1 | 50 | 50 | $10^{-6}$ level | 1300 | 1000 | 1.3 | 198 | 21 |
| Inventive 26 | LCP-2 | 70 | 30 | $10^{-6}$ level | 1400 | 950 | 1.5 | 195 | 29 |
| Inventive 27 | LCP-3 | 70 | 30 | $10^{-6}$ level | 1450 | 960 | 1.5 | 193 | 28 |
| Inventive 28 | LCP-4 | 70 | 30 | $10^{-6}$ level | 1450 | 960 | 1.5 | 187 | 30 |
| Inventive 29 | LCP-5 | 70 | 30 | $10^{-6}$ level | 1400 | 970 | 1.4 | 205 | 31 |
| Comparative 32 | LCP-1 | 100 | 0 | $10^{-6}$ level | 1500 | 600 | 2.5 | 198 | 45 |
| Comparative 33 | LCP-1 | 40 | 60 | $10^{-5}$ level | 1200 | 1050 | 1.1 | 198 | 7 |
| Comparative 34 | LCP-2 | 100 | 0 | $10^{-6}$ level | 1500 | 600 | 2.5 | 196 | 43 |
| Comparative 35 | LCP-3 | 100 | 0 | $10^{-6}$ level | 1590 | 740 | 2.1 | 192 | 40 |
| Comparative 36 | LCP-4 | 100 | 0 | $10^{-6}$ level | 1600 | 790 | 2.0 | 184 | 42 |
| Comparative 37 | LCP-5 | 100 | 0 | $10^{-6}$ level | 1500 | 630 | 2.4 | 206 | 40 |
| Comparative 38 | - | 0 | 100 | $10^{-5}$ level | 1300 | 1300 | 1.0 | 200 | 8 |
| Comparative 39 | LCP-6 | 70 | 30 | $10^{-6}$ level | 980 | 820 | 1.2 | 155 | 8 |
| Comparative 40 | LCP-7 | 70 | 30 | $10^{-6}$ level | 960 | 820 | 1.2 | 158 | 7 |
| Comparative 41 | LCP-13 | 70 | 30 | $10^{-6}$ level | 990 | 790 | 1.3 | 157 | 8 |
| Inventive 33 | LCP-14 | 70 | 30 | $10^{-6}$ level | 1400 | 950 | 1.5 | 202 | 30 |
| Comparative 46 | LCP-14 | 100 | 0 | $10^{-6}$ level | 1500 | 600 | 2.5 | 200 | 42 |

*1 (LCP-1)

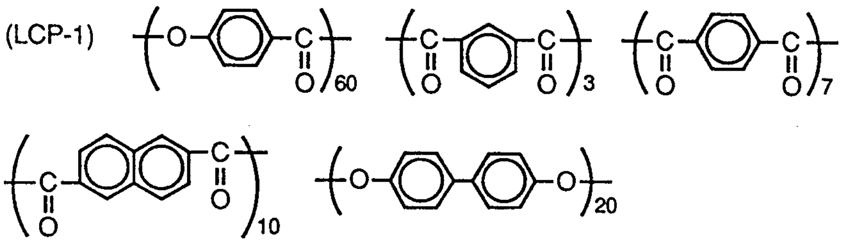

*2 (LCP-2)

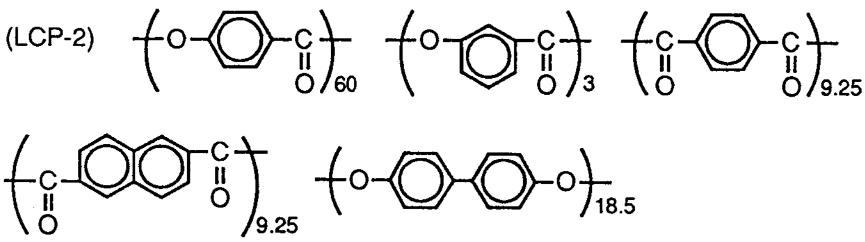

*3 (LCP-3)

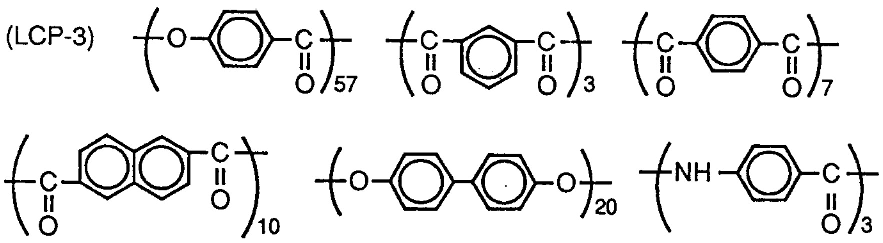

*4 (LCP-4)

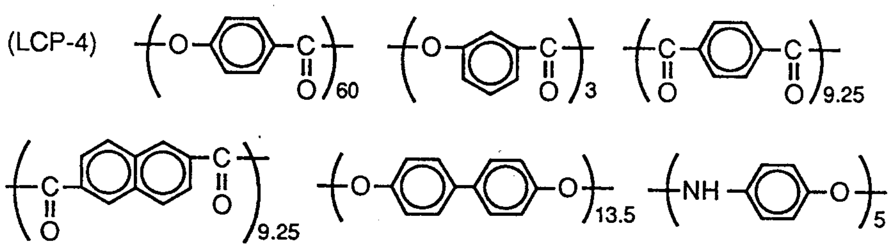

*5 (LCP-5)

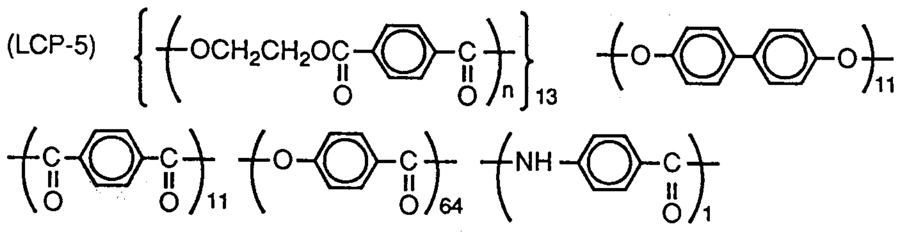

*6 (LCP-6)

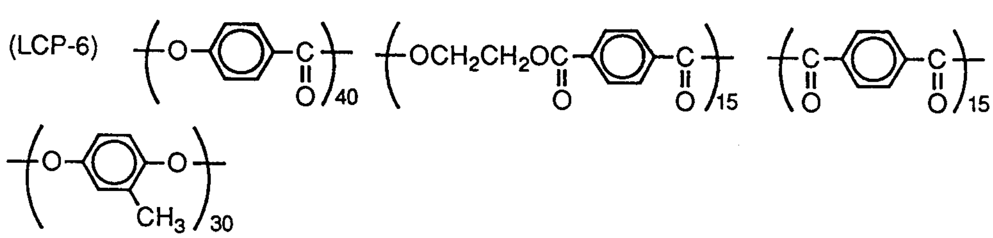

*7 (LCP-7)

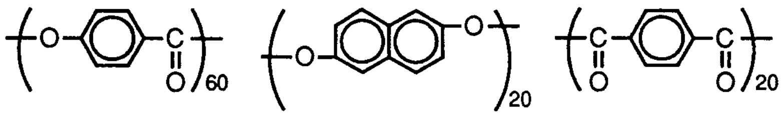

*8 (LCP-8)

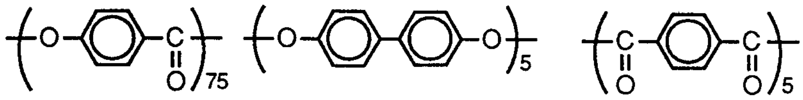

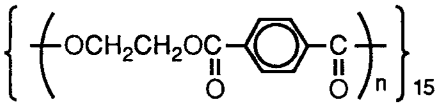

*9 (LCP-9)

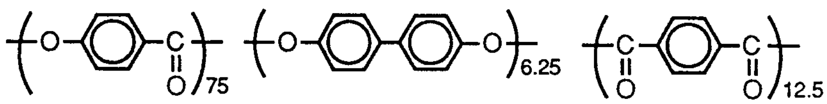

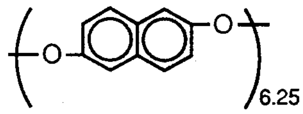

*10 (LCP-10)

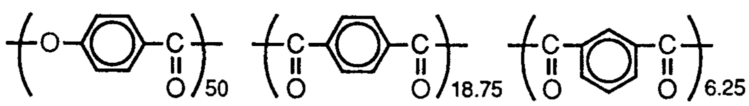

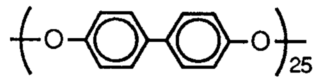

*11 (LCP-11)

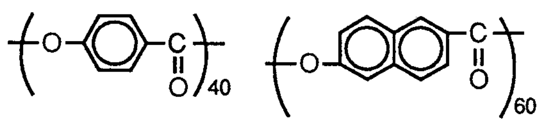

*12 (LCP-12)

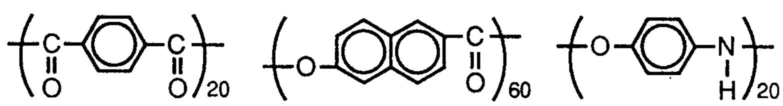

*13(LCP-13)

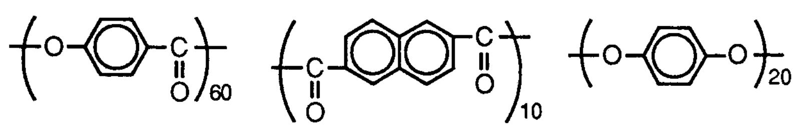

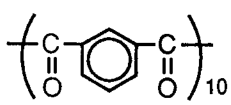

* 14 NOVAREX 7025A, product of Mitsubishi Kasei Corp.

* 15 Polyarylate resin U-100, product of Unitika, Ltd.

* 16 PAR-2

* 17 UDEL POLYSULFONE P-1700, product of Nissan Chemical Industries, Ltd.

* 18 VICTREX 4100G, product of Sumitomo Chemical Co., Ltd.

* 19 LCP-14

Thus, it is apparent that there has been provided, in accordance with the present invention, resin compositions which are possessed of markedly balanced physical properties with high heat distortion temperature, excellent heat resistance, excellent dimensional stability and mitigated anisotropy of mechanical strength. While the present invention has been described in conjunction with specific embodiments thereof, it is evident that many alternatives, modifications and variations will be apparent to those skilled in the art in light of the foregoing description. Accordingly, it is intended to include all such alternatives, modifications and variations as set forth within the spirit and scope of the appended claims.

**Claims**

**1.** A resin composition which comprises:

a liquid crystalline polyester resin (A) consisting essentially of units I, II, III, IV and V represented by the following formulae I to V;

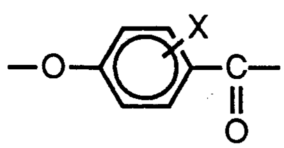

I,

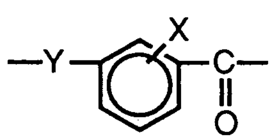

II,

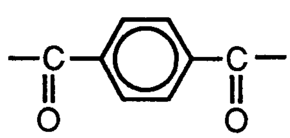

III,

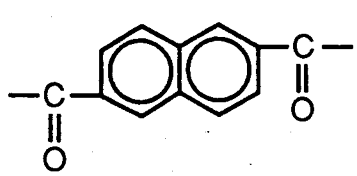

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group and formula V represents a symmetric dioxy unit having at least one single or condensed aromatic ring; said units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polycarbonate resin (D);

wherein the liquid crystalline polyester resin (A) is 45 to 95% by weight of the sum of the liquid crystalline polyester resin (A) and the polycarbonate resin (D).

**2.** A resin composition which comprises:

a liquid crystalline polyester resin (B) consisting essentially of units I, II, III, IV, V and VI represented by the following formulae I to VI;

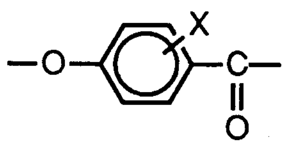

I,

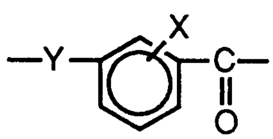

II,

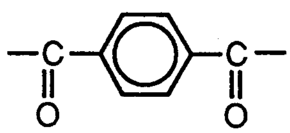

III,

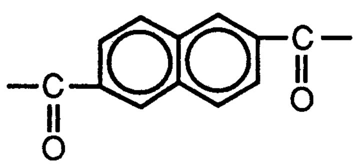

IV,

-O-Ar-O- V, and

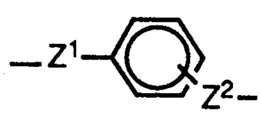

VI

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group, $Z^1$ is imino group and $Z^2$ is imino group, oxygen atom or carbonyl group, $Z^1$ and $Z^2$ being in para or meta position to each other, and formula V represents a symmetric dioxy unit having at least one single or condensed aromatic ring; said units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polycarbonate resin (D);

wherein the liquid crystalline polyester resin (B) is 45 to 95% by weight of the sum of the liquid crystalline polyester resin (B) and the polycarbonate resin (D).

**3.** A resin composition which comprises:

a liquid crystalline polyester resin (C) consisting essentially of units VI, VII, VIII, IX and X represented by the following formulae VI to X;

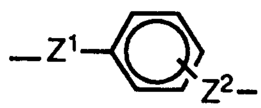 VI,

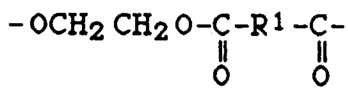 VII,

-O-$R^2$-O- VIII,

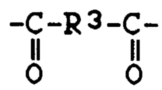 IX, and

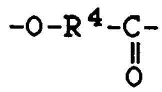 X

wherein $Z^1$ is imino group and $Z^2$ is imino group, oxygen atom or carbonyl group, $Z^1$ and $Z^2$ being in para or meta position to each other, and each of $R^1$, $R^2$, $R^3$ and $R^4$ is independently at least one divalent group selected from the class consisting of para-phenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, a halogen atom, nitro group, cyano group or an alkoxy group; said units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is imino group or oxygen atom while a molar ratio of unit IX / unit VIII ranges from 0.8 to 1.1 when $Z^2$ is carbonyl group; and

a polycarbonate resin (D);

wherein the liquid crystalline polyester resin (C) is 45 to 95% by weight of the sum of the liquid crystalline polyester resin (C) and the polycarbonate resin (D).

**4.** A resin composition which comprises at least two liquid crystalline polyester resins selected from the foregoing liquid crystalline polyester resins (A), (B) and (C) and the foregoing polycarbonate resin (D), wherein the liquid crystalline polyester resins are 45 to 95% by weight of the total amount of the liquid crystalline polyester resins and the polycarbonate resin (D).

**5.** A resin composition which comprises:

a liquid crystalline polyester resin (A) consisting essentially of units I, II, III, IV and V represented by the following formulae I to V;

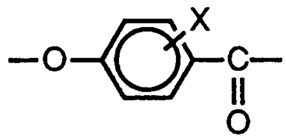

I,

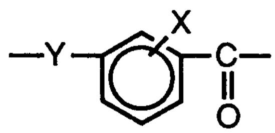

II,

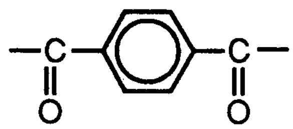

III,

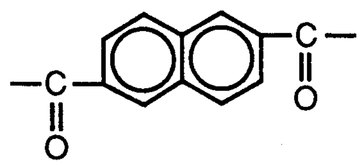

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or a carbonyl group and formula V represents a symmetric dioxy unit having at least one single or condensed aromatic ring; said units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (A) is 45 to 95% by weight of the sum of the liquid crystalline polyester resin (A) and the polyarylate-based resin (E).

**6.** A resin composition which comprises:

a liquid crystalline polyester resin (B) consisting essentially of units I, II, III, IV, V and VI represented by the following formulae I to VI;

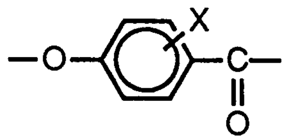

I,

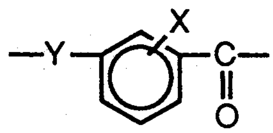

II,

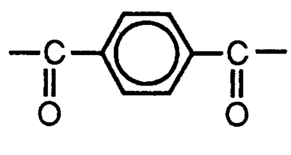

III,

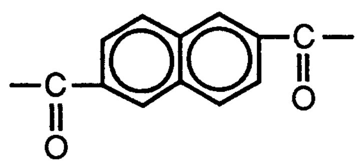

IV,

-O-Ar-O- V, and

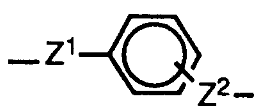

VI

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group, $Z^1$ is imino group and $Z^2$ is imino group, oxygen atom or carbonyl group, $Z^1$ and $Z^2$ being in para or meta position to each other, and formula V represents a symmetric dioxy unit having at least one single or condensed aromatic ring; said units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (B) is 45 to 95% by weight of the sum of the liquid crystalline polyester resin (B) and the polyarylate-based resin (E).

**7.** A resin composition which comprises:

a liquid crystalline polyester resin (C) consisting essentially of units VI, VII, VIII, IX and X represented by the following formulae VI to X;

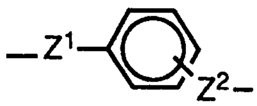 VI,

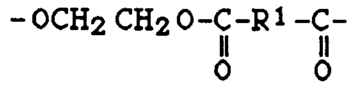 VII,

$-O-R^2-O-$ VIII,

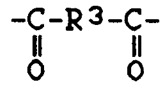 IX, and

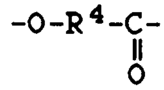 X

wherein $Z^1$ is imino group and $Z^2$ is imino group, oxygen atom or carbonyl group, $Z^1$ and $Z^2$ being in para or meta relation to each other, and each of $R^1$, $R^2$, $R^3$ and $R^4$ is independently at least one divalent group selected from the class consisting of para-phenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, halogen atom, nitro group, cyano group or an alkoxy group; said units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is imino group or oxygen atom while a molar ratio of unit IX / unit VIII ranges from 0.8 to 1.1 when $Z^2$ is carbonyl group; and

a polyarylate-based resin (E) which comprises a resin containing more than or equal to 70% by weight of a polyarylate resin component and/or a mixture containing more than or equal to 70% by weight of a polyarylate resin and other polymer compound;

wherein the liquid crystalline polyester resin (C) is 45 to 95% by weight of the sum of the liquid crystalline polyester resin (C) and the polyarylate-based resin (E).

**8.** A resin composition which comprises at least two liquid crystalline polyester resins selected from the aforementioned liquid crystalline polyester resins (A), (B) and (C) and the foregoing polyarylate-based resin (E), wherein the liquid crystalline polyester resins are 45 to 95% by weight of the total amount of the liquid crystalline polyester resins and the polyarylate-based resin (E).

**9.** A resin composition which comprises:

a liquid crystalline polyester resin (A) consisting essentially of units I, II, III, IV and V represented by the following formulae I to V;

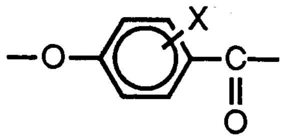

I,

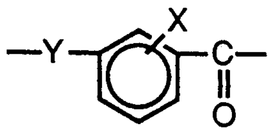

II,

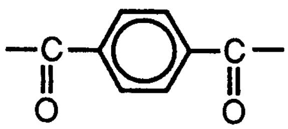

III,

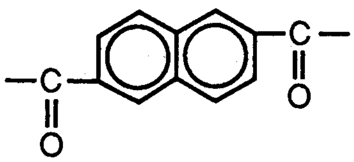

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group and formula V represents a symmetric dioxy unit having at least one single or condensed aromatic ring; said units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polyethersulfone resin (F);

wherein the liquid crystalline polyester resin (A) is 45 to 95% by weight of the sum of the liquid crystalline polyester resin (A) and the polyethersulfone resin (F).

**10.** A resin composition which comprises:

a liquid crystalline polyester resin (B) consisting essentially of units I, II, III, IV, V and VI represented by the following formulae I to VI;

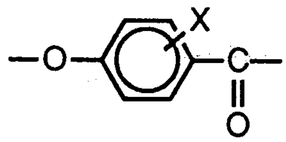

I,

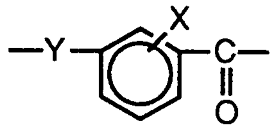

II,

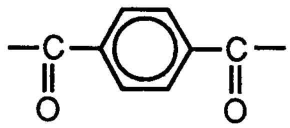

III,

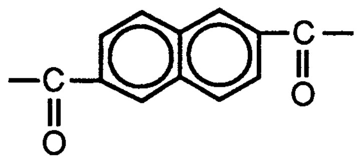

IV,

-O-Ar-O- V, and

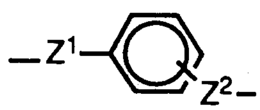

VI

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group, $Z^1$ is imino group and $Z^2$ is imino group, oxygen atom or carbonyl group, $Z^1$ and $Z^2$ being in para or meta position to each other, and formula V represents a symmetric dioxy unit having at least one single or condensed aromatic ring; said units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polyethersulfone resin (F);

wherein the liquid crystalline polyester resin (B) is 45 to 95% by weight of the sum of the liquid crystalline polyester resin (B) and the polyethersulfone resin (F).

**11.** A resin composition which comprises:

a liquid crystalline polyester resin (C) consisting essentially of units VI, VII, VIII, IX and X represented by the following formulae VI to X;

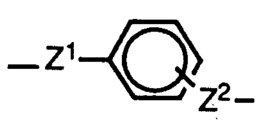

VI,

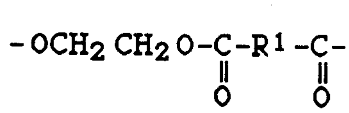

VII,

-O-$R^2$-O- VIII,

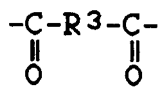

IX, and

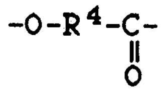

X

wherein $Z^1$ is imino group and $Z^2$ is imino group, oxygen atom or carbonyl group, $Z^1$ and $Z^2$ being in para or meta position to each other, and each of $R^1$, $R^2$, $R^3$ and $R^4$ is independently at least one divalent group selected from the class consisting of para-phenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, halogen atom, nitro group, cyano group or an alkoxy group; said units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is imino group or oxygen atom while a molar ratio of unit IX / unit VIII ranges from 0.8 to 1.1 when $Z^2$ is carbonyl group; and

a polyethersulfone resin (F);

wherein the liquid crystalline polyester resin (C) is 45 to 95% by weight of the sum of the liquid crystalline polyester resin (C) and the polyethersulfone resin (F).

**12.** A resin composition which comprises at least two liquid crystalline polyester resins selected from the aforementioned liquid crystalline polyester resins (A), (B) and (C) and the foregoing polyethersulfone resin (F), wherein the liquid crystalline polyester resins are 45 to 95% by weight of the total amount of the liquid crystalline polyester resins and the polyethersulfone resin (F).

**13.** A resin composition which comprises:

a liquid crystalline polyester resin (A) consisting essentially of units I, II, III, IV and V represented by the following formulae I to V;

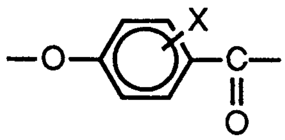

I,

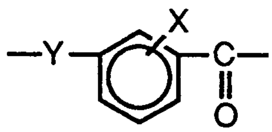

II,

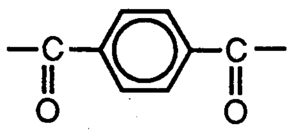

III,

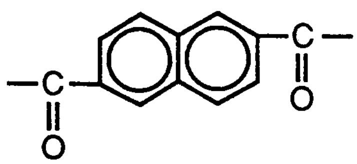

IV,

and

-O-Ar-O- V

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group and formula V represents a symmetric dioxy unit having at least one single or condensed aromatic ring; said units being in the amounts of 40 to 70 mol% for unit I, 1 to 8 mol% for unit II, 6 to 36 mol% for units (III + IV) and 10 to 40 mol% for unit V, with a molar ratio of unit III / (units III + IV) ranging from 0.1 to 0.8; and

a polysulfone resin (G);

wherein the liquid crystalline polyester resin (A) is 45 to 95% by weight of the sum of the liquid crystalline polyester resin (A) and the polysulfone resin (G).

**14.** A resin composition which comprises:

a liquid crystalline polyester resin (B) consisting essentially of units I, II, III, IV, V and VI represented by the following formulae I to VI;

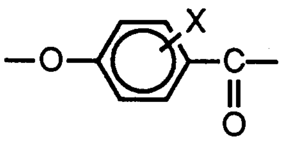
I,

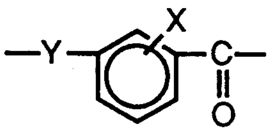
II,

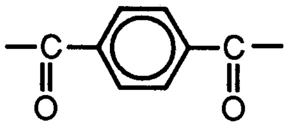
III,

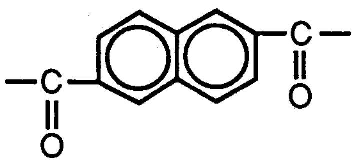
IV,

-O-Ar-O- V, and

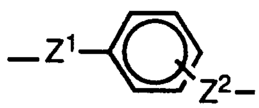
VI

wherein X is hydrogen atom, an alkyl group having from 1 to 4 carbon atoms, an alkoxy group having from 1 to 4 carbon atoms, an aryl group having from 8 to 10 carbon atoms or a halogen atom, Y is oxygen atom or carbonyl group, $Z^1$ is imino group and $Z^2$ is imino group, oxygen atom or carbonyl group, $Z^1$ and $Z^2$ being in para or meta position to each other, and formula V represents a symmetric dioxy unit having at least one single or condensed aromatic ring; said units being in the amounts of 40 to 70 mol% for unit I, 1 to 8 mol% for unit II, 6 to 36 mol% for units (III + IV), 10 to 40 mol% for unit V and 0.1 to 10 mol% for unit VI, with a molar ratio of unit III / (units III + IV) ranging from 0.1 to 0.8; and

a polysulfone resin (G);

wherein the liquid crystalline polyester resin (B) is 45 to 95% by weight of the sum of the liquid crystalline polyester resin (B) and the polysulfone resin (G).

**15.** A resin composition which comprises:

a liquid crystalline polyester resin (C) consisting essentially of units VI, VII, VIII, IX and X represented by the following formulae VI to X;

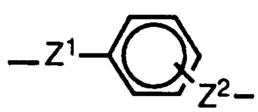
VI,

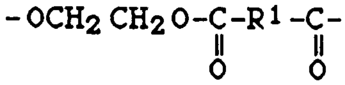
VII,

$-O-R^2-O-$ VIII,

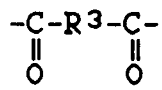

IX, and

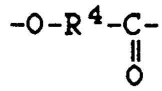

X

wherein $Z^1$ is imino group and $Z^2$ is imino group, oxygen atom or carbonyl group, $Z^1$ and $Z^2$ being in para or meta position to each other, and each of $R^1$, $R^2$, $R^3$ and $R^4$ is independently at least one divalent group selected from the class consisting of para-phenylene group, meta-phenylene group, 2,6-naphthalene group and 4,4'-biphenylene group, where $R^1$ through $R^4$ may be the same or different and some of the hydrogen atoms on the aromatic rings in $R^1$ through $R^4$ may be replaced by a low alkyl group, a halogen atom, nitro group, cyano group or an alkoxy group; said units being in the amounts of 0.1 to 10 mol% for unit VI, 3 to 30 mol% for unit VII, 5 to 30 mol% for units VIII and 30 to 85 mol% for unit X, with a molar ratio of unit IX / (units VI + VIII) ranging from 0.8 to 1.1 when $Z^2$ in the formula VI is imino group or oxygen atom while a molar ratio of unit IX / unit VIII ranges from 0.8 to 1.1 when $Z^2$ is carbonyl group; and

a polysulfone resin (G);

wherein the liquid crystalline polyester resin (C) is 45 to 95% by weight of the sum of the liquid crystalline polyester resin (C) and the polysulfone resin (G).

**16.** A resin composition which comprises at least two liquid crystalline polyester resins selected from the aforementioned liquid crystalline polyester resins (A), (B) and (C) and the foregoing polysulfone resin (G), wherein the liquid crystalline polyester resins are 45 to 95% by weight of the total amount of the liquid crystalline polyester resins and the polysulfone resin (G).